(19) **Europäisches Patentamt / European Patent Office / Office européen des brevets**

(11) **EP 4 521 653 A1**

(12) **EUROPEAN PATENT APPLICATION**
published in accordance with Art. 153(4) EPC

(43) Date of publication:
**12.03.2025 Bulletin 2025/11**

(21) Application number: **23814821.7**

(22) Date of filing: **21.04.2023**

(51) International Patent Classification (IPC):
**H04B 7/06** (2006.01)

(52) Cooperative Patent Classification (CPC):
**G06N 3/084; H04B 7/0456; H04B 7/06**

(86) International application number:
**PCT/CN2023/089764**

(87) International publication number:
**WO 2023/231635 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 CN 202210609813**

(71) Applicant: **Huawei Technologies Co., Ltd.**
**Shenzhen, Guangdong 518129 (CN)**

(72) Inventors:
• **HU, Bin**
  **Shenzhen, Guangdong 518129 (CN)**
• **ZHANG, Gongzheng**
  **Shenzhen, Guangdong 518129 (CN)**
• **WANG, Jian**
  **Shenzhen, Guangdong 518129 (CN)**
• **LI, Rong**
  **Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **MODEL TRANSMISSION METHOD AND APPARATUS**

(57)     Embodiments of this application provide a model transmission method and apparatus, and relate to the field of communication technologies. The method includes: obtaining information about N first models, where the N first models correspond to N first tasks, and N is an integer greater than or equal to 2; obtaining fusion auxiliary information, where the fusion auxiliary information includes an external feature value of a target model, the target model corresponds to a second task, and the second task is different from the N first tasks; determining N first signals based on the information about the N first models and the fusion auxiliary information; and sending the N first signals. According to the model transmission method in this application, joint transmission of a plurality of models can be implemented, resource overheads and a latency of the plurality of models in a transmission process can be effectively reduced, and storage space reserved by a receiver apparatus for the models can be saved.

1200

| S1210: Obtain information about N first models |
| --- |
| S1220: Obtain fusion auxiliary information |
| S1230: Determine N first signals based on the information about the N first models and the fusion auxiliary information |
| S1240: Send the N first signals |

FIG. 12

**Description**

This application claims priority to Chinese Patent Application No. 202210609813.5, filed with the China National Intellectual Property Administration on May 31, 2022 and entitled "MODEL TRANSMISSION METHOD AND APPARATUS", which is incorporated herein by reference in its entirety.

**TECHNICAL FIELD**

Embodiments of this application relate to the field of communication technologies, and specifically, to a model transmission method and apparatus.

**BACKGROUND**

An artificial neural network (artificial neural network, ANN) is a nonlinear statistical data modeling tool that simulates a biological neural network to process information. In most cases, the artificial neural network can change an internal structure based on external information, and is an adaptive system with a learning capability. Depending on complexity of the system, this type of network processes information by adjusting an interconnection relationship between a large quantity of internal nodes, and has been widely used in fields such as image classification, facial recognition, and speech recognition.

With popularization of artificial neural network technologies and wide application of edge artificial intelligence (artificial intelligence, AI) devices (for example, a vehicle-mounted mobile apparatus, an uncrewed aerial vehicle, a smartphone, and a personal digital assistant), more services use a neural network model. Accordingly, a plurality of neural network models may need to be transmitted for a same client.

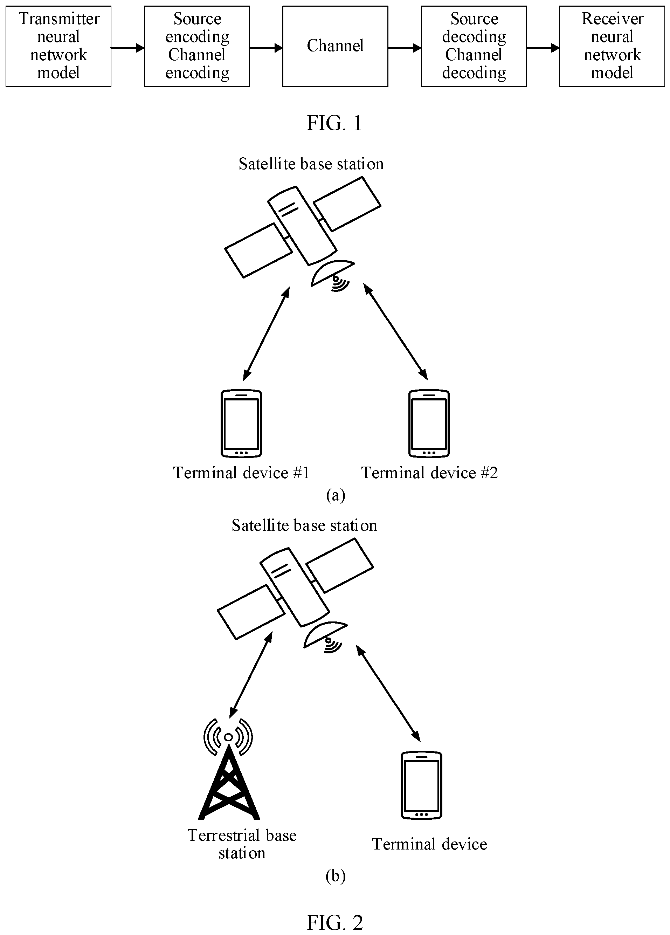

Currently, there is a known communication technology. As shown in FIG. 1, a neural network model is considered as to-be-transmitted data, a corresponding signal is generated by encoding the data, and the signal is sent through a radio link, to implement transmission of the neural network model. However, in this transmission process, a communication process is not combined with a training process of an artificial intelligence application, and a plurality of neural network models are transmitted independently of each other. Consequently, neural network model transmission performance is relatively low, and a requirement of a current service cannot be met.

Therefore, how to implement efficient transmission of a plurality of neural network models and reduce resource overheads and a latency of the plurality of neural network models in a transmission process has become a technical problem to be urgently resolved in the industry.

**SUMMARY**

Embodiments of this application provide a model transmission method and apparatus, to implement joint transmission of a plurality of models, reduce resource overheads and a latency of the plurality of models in a transmission process, and save storage space of a receiver device for a target neural network model.

According to a first aspect, a model transmission method is provided, applied to a transmitter apparatus or a chip in a transmitter apparatus. The method includes: obtaining information about N first models, where the N first models correspond to N first tasks, and N is an integer greater than or equal to 2; obtaining fusion auxiliary information, where the fusion auxiliary information includes an external feature value of a target model, the target model corresponds to a second task, and the second task is different from the first tasks; determining N first signals based on the information about the N first models and the fusion auxiliary information; and sending the N first signals. According to the solution in this embodiment of this application, the method may be applied to the transmitter apparatus or a chip or a chip system on a transmitter apparatus side.

According to the solution in this embodiment of this application, the transmitter apparatus obtains the information about the N first models and the fusion auxiliary information, processes the information about the N first models and the fusion auxiliary information based on first modules to obtain the N first signals, and then sends the N first signals. Then, a receiver apparatus may receive a second signal corresponding to the target model, where the second signal is obtained by superimposing the N first signals on a channel. According to the foregoing model transmission method, joint transmission of a plurality of different neural network models can be implemented, resource overheads and a latency of the plurality of neural network models in a transmission process can be reduced, and storage space of the receiver for the neural network models can be saved to some extent.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

With reference to the first aspect, in some implementations of the first aspect, the N first signals are obtained by the first modules in the transmitter apparatus by processing the information about the N first models and the fusion auxiliary information.

With reference to the first aspect, in some implementations of the first aspect, the first modules are obtained through training based on training data, the training data includes M first training signals and the target model, the M first training signals are in a one-to-one correspondence with M training models, the target model can meet a task corresponding to the M training models, and M is an integer greater than or equal to 2.

With reference to the first aspect, in some implementations of the first aspect, the first modules are determined based on a parameter of a channel for sending the N first signals.

It should be understood that the parameter of the channel includes one or more of the following: channel state information (channel state information, CSI), a signal-to-noise ratio (signal-to-noise ratio, SNR), and link quality. The channel state information may include: a channel quality indicator (channel quality indicator, CQI), a rank indicator (rank indicator, RI), and a precoding matrix (precoder matrix, PMI).

With reference to the first aspect, in some implementations of the first aspect, a first module corresponding to an $i^{th}$ model in the N first models is determined based on information about at least one first model in the N first models other than the $i^{th}$ model in the first models.

With reference to the first aspect, in some implementations of the first aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal, where the third training signal corresponds to an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the first modules from the model library.

According to the solution in this embodiment of this application, the first model may be obtained through model training, to help superimpose the N first signals on the channel, and then obtain the second signal corresponding to the target model.

With reference to the first aspect, in some implementations of the first aspect, the model transmission method further includes: sending the fusion auxiliary information.

With reference to the first aspect, in some implementations of the first aspect, the fusion auxiliary information is from a receiver apparatus of the N first signals; or the fusion auxiliary information is from a server that provides a service for a receiver apparatus of the N first signals.

Optionally, the information about the N first models is carried in N signals A, and the N first models are in a one-to-one correspondence with the N signals A.

Specifically, in the model transmission method in this embodiment of this application, a process in which the N first modules process the N signals A corresponding to the N first models may include one or more of the following manners.

In this embodiment of this application, the N signals A may be analog signals or digital signals.

Manner 1

In manner 1, the N signals A are signals on which source encoding, channel encoding, modulation, and up-conversion or down-conversion are not performed.

In an implementation of manner 1, the N first signals obtained by processing the N signals A through N pieces of corresponding processing are signals on which source encoding, channel encoding, modulation, and up-conversion or down-conversion are not performed.

Optionally, the N first signals may be processed through subsequent source encoding, channel encoding, modulation, and up-conversion or down-conversion, and the N processed first signals are sent through a same channel.

In another implementation of manner 1, the N first signals obtained by processing the N signals A through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 1, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 1, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 1, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 2

In manner 2, the N signals A are signals obtained through source encoding.

In an implementation of manner 2, the N first signals obtained by processing the N first signals through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 2, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 2, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 2, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 3

In manner 3, the N signals A are signals obtained through source encoding and channel encoding.

In an implementation of manner 3, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 3, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 3, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 4

In manner 4, the N signals A are signals obtained through source encoding, channel encoding, and modulation.

In an implementation of manner 4, the N second signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 4, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 5

In manner 5, the N signals A are signals obtained through source encoding, channel encoding, modulation, and up-conversion or down-conversion.

In an implementation of manner 5, the N first signals obtained by processing the N signals A through the N corresponding first modules are signals obtained through source encoding, channel encoding, modulation, and up-conversion or down-conversion. Then, the transmitter apparatus sends the N first signals through a same channel.

According to a second aspect, a model transmission method is provided, applied to a transmitter apparatus or a chip in a transmitter apparatus. The method includes: obtaining N first signals, where the N first signals are in a one-to-one correspondence with N first models, each first signal is used to carry information about a corresponding first model, the information about the first model includes an external feature value of the model and/or a parameter of the model, and N is an integer greater than or equal to 2; obtaining N second models, where the N second models are in a one-to-one correspondence with the N first models, the N second models are obtained through training based on training data, the training data includes M first training signals and a target model, the M first training signals correspond to M training models, each first training signal is a signal of a corresponding training model, the target model can meet services corresponding to the M training models, M is an integer greater than or equal to 2, the M services corresponding to the M first training models include N services corresponding to the N first models, and a first model and a second model that correspond to each other are corresponding to a same service; processing the N first signals based on the N second models to obtain N second signals, where an $n^{th}$ second signal in the N second signals is a signal obtained by processing an $n^{th}$ first signal based on an $n^{th}$ second model, the $n^{th}$ first signal is a signal of a first model corresponding to the $n^{th}$ second model, and $n \in [1, N]$; and sending the N second signals through a same channel.

According to the solution in this embodiment of this application, the transmitter apparatus obtains the N first signals corresponding to the N first models, processes the N first signals based on the N second models to obtain the N second signals, and then sends the N second signals through a first channel. Then, a receiver apparatus may receive a third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver for the neural network models can be saved to some extent.

The external feature value of the model includes one or more of the following information: neural network computation graph information, optimizer information, and hyperparameter information.

With reference to the second aspect, in some implementations of the second aspect, the obtaining N second models includes: obtaining the N second models based on a parameter of a channel for sending the N second signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the second aspect, in some implementations of the second aspect, the obtaining N second models further includes: determining, based on information about at least one first model other than an $i^{th}$ first model in the N first models, a second model corresponding to the $i^{th}$ first model, where $i \in [1, N]$.

With reference to the second aspect, in some implementations of the second aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal; parsing the third training signal to obtain an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the N second models from the model library.

According to the solution in this embodiment of this application, the second model that meets a task requirement may be obtained through model training, to superimpose the N first signals on the channel, and then obtain the second signal corresponding to the target model.

It should be understood that the parameter of the model may include a weight matrix, a weight vector, a bias matrix, and a bias vector.

Specifically, in the model transmission method in this embodiment of this application, a process in which the N second models process the N first signals corresponding to the N first models may include one or more of the following manners.

In this embodiment of this application, the N first signals may be analog signals or digital signals.

Manner 1

In manner 1, the N first signals are signals on which source encoding, channel encoding, modulation, and up-conversion or down-conversion are not performed.

In an implementation of manner 1, the N second signals obtained by processing the N first signals through the N corresponding second models are signals on which source encoding, channel encoding, modulation, and up-conversion or down-conversion are not performed.

Optionally, the N second signals may be processed through subsequent source encoding, channel encoding, modulation, and up-conversion or down-conversion, and the N processed second signals are sent through a same channel.

In another implementation of manner 1, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 1, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 1, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 1, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 2

In manner 2, the N first signals are signals obtained through source encoding.

In an implementation of manner 2, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 2, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 2, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 2, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 3

In manner 3, the N first signals are signals obtained through source encoding and channel encoding.

In an implementation of manner 3, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 3, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 3, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 4

In manner 4, the N first signals are signals obtained through source encoding, channel encoding, and modulation.

In an implementation of manner 4, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 4, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 5

In manner 5, the N first signals are signals obtained through source encoding, channel encoding, modulation, and up-conversion or down-conversion.

In an implementation of manner 5, the N second signals obtained by processing the N first signals through the N corresponding second models are signals obtained through source encoding, channel encoding, modulation, and up-conversion or down-conversion. Then, the transmitter apparatus sends the N second signals through a same channel.

With reference to the second aspect, in some implementations of the second aspect, the model transmission method further includes: receiving first information, where the first information is used to determine the N first models.

The first information is from a receiver apparatus of the second signals, or the first information is from a server that provides a service for a receiver apparatus of the second signals. The first information includes one or more of the following: neural network computation graph information, optimizer information, and hyperparameter information.

According to a third aspect, a model transmission method is provided, applied to a system in which at least two transmitter apparatuses perform model transmission to one receiver apparatus. The method includes: obtaining, by a first transmitter apparatus, information about S first models in N first models, where the S first models in the N first models correspond to S first tasks; obtaining first fusion auxiliary information, where the first fusion auxiliary information includes an external feature value of a target model, the target model corresponds to a second task, and the second task is different from the S first tasks; obtaining, by a second transmitter apparatus, information about K first models in the N first models, where the K first models in the N first models correspond to K first tasks; obtaining second fusion auxiliary information, where the second fusion auxiliary information includes the external feature value of the target model, the target model corresponds to the second task, the second task is different from the K first tasks, and an intersection set of the S first models and the K first models is an empty set; and sending the S first signals and the K first signals. It may be understood that if there are only two transmitter apparatuses, the N first models are a union set of the S first models and the K first models. Optionally, the apparatus may be an apparatus or a chip in an apparatus.

According to the solution in this embodiment of this application, a plurality of transmitter apparatuses may obtain information about the N first models and fusion auxiliary information (for example, when N=2, the first transmitter apparatus may obtain the S first models in the N first models and the first fusion auxiliary information, and the second transmitter apparatus may obtain the K first models in the N first models and the second fusion auxiliary information, where the intersection set of the K first models and the S first models is an empty set), process the information about the N first models and the fusion auxiliary information based on N first modules to obtain N first signals (for example, when N=2, the information about the S first models and the first fusion auxiliary information that are corresponding to the first transmitter apparatus are processed through corresponding first modules to obtain the S first signals, and the information about the K first models and the second fusion auxiliary information that are corresponding to the second transmitter apparatus are processed through corresponding first modules to obtain the K first signals), and then send the N first signals. Then, the receiver apparatus may receive the second signal corresponding to the target model, where the second signal is obtained by superimposing the N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

Specifically, in a process in which one transmitter apparatus performs model transmission to one receiver apparatus, the N first signals are obtained by first modules by processing the information about the N first models and the fusion auxiliary information. In a process in which a plurality of transmitter apparatuses, for example, two transmitter apparatuses, perform model transmission to one receiver apparatus, the S first signals are obtained by the first transmitter apparatus by processing the information about the S first models in the S first models and the first fusion auxiliary information through corresponding first modules, and the K first signals are obtained by the second transmitter apparatus by processing the information about the K first models in the K first models and the second fusion auxiliary information through corresponding first modules.

It should be understood that, in this embodiment of this application, the first fusion auxiliary information and the second fusion auxiliary information may be the same or may be different. When the first fusion auxiliary information is the same as the second fusion auxiliary information, both the first fusion auxiliary information and the second fusion auxiliary information may indicate the external feature value of the target model. When the first fusion auxiliary information is different from the second fusion auxiliary information, the first fusion auxiliary information indicates a first subset of the external feature value of the target model, the second fusion auxiliary information indicates a second subset of the external feature value of the target model, the first subset is different from the second subset, and the external feature value of the target model is a union set of the first subset and the second subset.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

With reference to the third aspect, in some implementations of the third aspect, the first modules corresponding to the first transmitter apparatus or the first modules corresponding to the second transmitter apparatus are obtained through training based on training data, the training data includes M first training signals and the target model, the M first training signals are in a one-to-one correspondence with M training models, the target model can meet a task corresponding to the M training models, and M is an integer greater than or equal to 2.

With reference to the third aspect, in some implementations of the third aspect, the first modules corresponding to the first transmitter apparatus or the first modules corresponding to the second transmitter apparatus are determined based on a parameter of a channel for sending the corresponding first signals or the N first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the third aspect, in some implementations of the third aspect, a first module corresponding to an $i^{th}$ model in the S first models is determined based on information about at least one first model in the S first models other than the $i^{th}$ model in the first models; and a first module corresponding to a $j^{th}$ model in the K first models is determined based on information about at least one first model in the K first models other than the $j^{th}$ model in the first models.

With reference to the third aspect, in some implementations of the third aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal, where the third training signal corresponds to an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the first modules from the model library.

With reference to the third aspect, in some implementations of the third aspect, the model transmission method further includes: sending the fusion auxiliary information.

With reference to the third aspect, in some implementations of the third aspect, the fusion auxiliary information is from a receiver apparatus of the N first signals; or the fusion auxiliary information is from a server that provides a service for a receiver apparatus of the N first signals.

Optionally, the information about the N first models is carried in N signals A, and the N first models are in a one-to-one correspondence with the N signals A.

Specifically, in the model transmission method in this embodiment of this application, a process in which the N first modules process the N signals A corresponding to the N first models may include one or more of the following manners.

In this embodiment of this application, the N signals A may be analog signals or digital signals.

Manner 1

In manner 1, the N signals A are signals on which source encoding, channel encoding, modulation, and up-conversion or down-conversion are not performed.

In an implementation of manner 1, the N first signals obtained by processing the N signals A through N pieces of corresponding processing are signals on which source encoding, channel encoding, modulation, and up-conversion or down-conversion are not performed.

Optionally, the N first signals may be processed through subsequent source encoding, channel encoding, modulation, and up-conversion or down-conversion, and the N processed first signals are sent through a same channel.

In another implementation of manner 1, the N first signals obtained by processing the N signals A through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 1, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 1, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 1, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 2

In manner 2, the N signals A are signals obtained through source encoding.

In an implementation of manner 2, the N first signals obtained by processing the N first signals through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 2, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 2, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 2, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 3

In manner 3, the N signals A are signals obtained through source encoding and channel encoding.

In an implementation of manner 3, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 3, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 3, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 4

In manner 4, the N signals A are signals obtained through source encoding, channel encoding, and modulation.

In an implementation of manner 4, the N second signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 4, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 5

In manner 5, the N signals A are signals obtained through source encoding, channel encoding, modulation, and up-conversion or down-conversion.

In an implementation of manner 5, the N first signals obtained by processing the N signals A through the N corresponding first modules are signals obtained through source encoding, channel encoding, modulation, and up-conversion or down-conversion. Then, the transmitter apparatus sends the N first signals through a same channel.

According to a fourth aspect, a model transmission method is provided, applied to a system in which at least two transmitter apparatuses perform model transmission to one receiver apparatus. The method includes: obtaining, by a first transmitter apparatus, S first signals, where the S first signals are in a one-to-one correspondence with S first models, each first signal is used to carry information about a corresponding first model, the information about the first model includes an external feature value of the model and/or a parameter of the model, and S is an integer greater than or equal to 1; obtaining S second models, where the S second models are in a one-to-one correspondence with the S first models, the S second models are obtained through training based on training data, the training data includes M first training signals and a target model, the M first training signals correspond to M training models, each first training signal is a signal of a corresponding training model, the target model can meet services corresponding to the M training models, M is an integer greater than or equal to 2, the M services corresponding to the M first training models include N services corresponding to the S first models, and a first model and a second model that correspond to each other are corresponding to a same service; and processing the N first signals based on the S second models to obtain S second signals, where an $s^{th}$ second signal in the S second signals is a signal obtained by processing an $s^{th}$ first signal based on an $s^{th}$ second model, the $s^{th}$ first signal is a signal of a first model corresponding to the $s^{th}$ second model, and $s \in [1, S]$;

obtaining, by a second transmitter apparatus, K first signals, where the K first signals are in a one-to-one correspondence with K first models, each first signal is used to carry information about a corresponding first model, the information about the first model includes an external feature value of the model and/or a parameter of the model, and K is an integer greater than or equal to 1; obtaining K second models, where the K second models are in a one-to-one correspondence with the K first models, the K second models are obtained through training based on the training data, the training data includes the M first training signals and the target model, the M first training signals correspond to the M training models, each first training signal is a signal of a corresponding training model, the target model can meet the services corresponding to the M training models, M is an integer greater than or equal to 2, the M services corresponding to the M first training models include N services corresponding to the K first models, and a first model and a second model that correspond to each other are corresponding to a same service; processing the N first signals based on the K second models to obtain K second signals, where a $k^{th}$ second signal in the K second signals is a signal obtained by processing a $k^{th}$ first signal based on a $k^{th}$ second model, the $k^{th}$ first signal is a signal of a first model corresponding to the $k^{th}$ second model, ke[1, K], and an intersection set of the K first models and the S first models is an empty set; and
sending the S second signals and the K second signals.

According to the solution in this embodiment of this application, a plurality of transmitter apparatuses may obtain N first signals corresponding to N first models (for example, when N=2, the first transmitter apparatus may obtain the S first signals corresponding to the S first models in the N first models, and the second transmitter apparatus may obtain the K first signals corresponding to the K first models in the N first models, where the intersection set of the K first models and the S first models is an empty set), process the N first signals based on N second models to obtain N second signals (for example, when N=2, the S first signals corresponding to the first transmitter apparatus are processed through corresponding second models to obtain the S second signals, and the K first signals corresponding to the second transmitter apparatus are processed through corresponding second models to obtain the K second signals), and then send the N second signals through a first channel. Then, a receiver apparatus may receive a third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

The external feature value of the model includes one or more of the following information: neural network computation graph information, optimizer information, and hyperparameter information.

With reference to the fourth aspect, in some implementations of the fourth aspect, the obtaining N second models includes: obtaining the N second models based on a parameter of a channel for sending the N second signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the fourth aspect, in some implementations of the fourth aspect, the obtaining N second models further includes: determining, based on information about at least one first model other than an $i^{th}$ first model in the N first models, a second model corresponding to the $i^{th}$ first model, where $i \in [1, N]$.

With reference to the fourth aspect, in some implementations of the fourth aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal; parsing the third training signal to obtain an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the N second models from the model library.

According to the solution in this embodiment of this application, the second model that meets a task requirement is obtained through model training, to superimpose the N second signals on the channel, and further obtain the third signal corresponding to the target model.

It should be understood that the parameter of the model may include a weight matrix, a weight vector, a bias matrix, and a bias vector.

Specifically, in the model transmission method in this embodiment of this application, a process in which the N second models process the N first signals corresponding to the N first models may include one or more of the following manners.

In this embodiment of this application, the N first signals may be analog signals or digital signals.

Manner 1

In manner 1, the N first signals are signals on which source encoding, channel encoding, modulation, and up-conversion or down-conversion are not performed.

In an implementation of manner 1, the N second signals obtained by processing the N first signals through the N corresponding second models are signals on which source encoding, channel encoding, modulation, and up-conversion or down-conversion are not performed.

Optionally, the N second signals may be processed through subsequent source encoding, channel encoding, modulation, and up-conversion or down-conversion, and the N processed second signals are sent through a same channel.

In another implementation of manner 1, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 1, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 1, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 1, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 2

In manner 2, the N first signals are signals obtained through source encoding.

In an implementation of manner 2, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 2, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 2, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 2, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 3

In manner 3, the N first signals are signals obtained through source encoding and channel encoding.

In an implementation of manner 3, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 3, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 3, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 4

In manner 4, the N first signals are signals obtained through source encoding, channel encoding, and modulation.

In an implementation of manner 4, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 4, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 5

In manner 5, the N first signals are signals obtained through source encoding, channel encoding, modulation, and up-conversion or down-conversion.

In an implementation of manner 5, the N second signals obtained by processing the N first signals through the N corresponding second models are signals obtained through source encoding, channel encoding, modulation, and up-conversion or down-conversion. Then, the transmitter apparatus sends the N second signals through a same channel.

With reference to the fourth aspect, in some implementations of the fourth aspect, the model transmission method further includes: receiving first information, where the first information is used to determine the N first models.

The first information is from a receiver apparatus of the second signals, or the first information is from a server that provides a service for a receiver apparatus of the second signals. The first information includes one or more of the following: neural network computation graph information, optimizer information, and hyperparameter information.

According to a fifth aspect, a model transmission method is provided, applied to a transmitter apparatus or a chip in a transmitter apparatus. The method includes: obtaining information about S first models in N first models, where the S first models correspond to S first tasks, N is an integer greater than or equal to 1, and S is an integer less than or equal to N; obtaining first fusion auxiliary information, where the first fusion auxiliary information includes an external feature value of a target model, the target model corresponds to a second task, and the second task is different from the S first tasks; determining S first signals based on the information about the S first models and the first fusion auxiliary information; and sending the S first signals.

According to the solution in this embodiment of this application, the transmitter apparatus obtains the information about the S first models in the N first models and the first fusion auxiliary information, processes the information about the S first models and the first fusion auxiliary information based on first modules to obtain the S first signals, and then sends the S first signals. When S is less than N, one or more other transmitters also send a first signal in N-S first signals. Then, a receiver apparatus may receive a second signal corresponding to the target model. Optionally, the second signal is obtained by superimposing, on a channel, N first signals including the S first signals. According to the foregoing model transmission method, joint transmission of a plurality of different neural network models can be implemented, the method is also applicable to a scenario in which transmitter apparatuses are distributed, resource overheads and a latency of the plurality of neural network models in a transmission process can be reduced, and storage space of the receiver apparatus for the neural network models can be saved to some extent.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

It should be understood that in this embodiment of this application, the first fusion auxiliary information may be the external feature value of the target model, or may be a subset of the external feature value of the target model.

With reference to the fifth aspect, in some implementations of the fifth aspect, the S first signals are obtained by the first modules in the transmitter apparatus by processing the information about the S first models and the first fusion auxiliary information.

With reference to the fifth aspect, in some implementations of the fifth aspect, the first modules are obtained through training based on training data, the training data includes M first training signals and the target model, the M first training signals are in a one-to-one correspondence with M training models, the target model can meet a task corresponding to the M training models, and M is an integer greater than or equal to 2.

With reference to the fifth aspect, in some implementations of the fifth aspect, the first modules are determined based on a parameter of a channel for sending the S first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the fifth aspect, in some implementations of the fifth aspect, a first module corresponding to an $i^{th}$ model in the S first models is determined based on information about at least one first model in the S first models other than the $i^{th}$ model in the first models.

With reference to the fifth aspect, in some implementations of the fifth aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal, where the third training signal corresponds to an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the first modules from the model library.

With reference to the fifth aspect, in some implementations of the fifth aspect, the model transmission method further includes: sending the first fusion auxiliary information.

With reference to the fifth aspect, in some implementations of the fifth aspect, the first fusion auxiliary information is from a receiver apparatus of the S first signals; or the first fusion auxiliary information is from a server that provides a service for a receiver apparatus of the S first signals.

Optionally, the information about the S first models is carried in S signals A, and the S first models are in a one-to-one correspondence with the S signals A.

Specifically, in the model transmission method in this embodiment of this application, a process in which the S first modules process the S signals A corresponding to the S first models may include one or more of the following manners.

In this embodiment of this application, the S signals A may be analog signals or digital signals.

Manner 1

In manner 1, the S signals A are signals on which source encoding, channel encoding, modulation, and up-conversion or down-conversion are not performed.

In an implementation of manner 1, the S first signals obtained by processing the S signals A through S pieces of corresponding processing are signals on which source encoding, channel encoding, modulation, and up-conversion or down-conversion are not performed.

Optionally, the S first signals may be processed through subsequent source encoding, channel encoding, modulation, and up-conversion or down-conversion, and the S processed first signals are sent through a same channel.

In another implementation of manner 1, the S first signals obtained by processing the S signals A through the S corresponding first modules are signals obtained through source encoding.

Optionally, the S first signals may be processed through subsequent channel encoding, modulation, and up-conversion or down-conversion, and the N processed first signals are sent through a same channel.

In another implementation of manner 1, the S first signals obtained by processing the S signals A through the S corresponding first modules are signals obtained through source encoding and channel encoding.

Optionally, the S first signals may be processed through subsequent modulation and up-conversion or down-conversion, and the S processed first signals are sent through a same channel.

In another implementation of manner 1, the S first signals obtained by processing the S signals A through the S corresponding first modules are signals obtained through source encoding, channel encoding, and modulation.

Optionally, the S first signals may be processed through subsequent up-conversion or down-conversion, and the S processed first signals are sent through a same channel.

In another implementation of manner 1, the S first signals obtained by processing the S signals A through the S corresponding first modules are signals obtained through source encoding, channel encoding, modulation, and up-conversion or down-conversion. Then, the transmitter apparatus sends the S first signals through a same channel.

Manner 2

In manner 2, the S signals A are signals obtained through source encoding.

In an implementation of manner 2, the S first signals obtained by processing the S first signals through the S corresponding first modules are signals obtained through source encoding.

Optionally, the S first signals may be processed through subsequent channel encoding, modulation, and up-conversion or down-conversion, and the S processed first signals are sent through a same channel.

In another implementation of manner 2, the S first signals obtained by processing the S signals A through the S corresponding first modules are signals obtained through source encoding and channel encoding.

Optionally, the S first signals may be processed through subsequent modulation and up-conversion or down-conversion, and the N processed first signals are sent through a same channel.

In another implementation of manner 2, the S first signals obtained by processing the S signals A through the S corresponding first modules are signals obtained through source encoding, channel encoding, and modulation.

Optionally, the S first signals may be processed through subsequent up-conversion or down-conversion, and the S processed first signals are sent through a same channel.

In another implementation of manner 2, the S first signals obtained by processing the S signals A through the S corresponding first modules are signals obtained through source encoding, channel encoding, modulation, and up-conversion or down-conversion. Then, the transmitter apparatus sends the S first signals through a same channel.

Manner 3

In manner 3, the S signals A are signals obtained through source encoding and channel encoding.

In an implementation of manner 3, the S first signals obtained by processing the S signals A through the S corresponding first modules are signals obtained through source encoding and channel encoding.

Optionally, the S first signals may be processed through subsequent modulation and up-conversion or down-conversion, and the S processed first signals are sent through a same channel.

In another implementation of manner 3, the S first signals obtained by processing the S signals A through the S corresponding first modules are signals obtained through source encoding, channel encoding, and modulation.

Optionally, the S first signals may be processed through subsequent up-conversion or down-conversion, and the S processed first signals are sent through a same channel.

In another implementation of manner 3, the S first signals obtained by processing the S signals A through the S corresponding first modules are signals obtained through source encoding, channel encoding, modulation, and up-conversion or down-conversion. Then, the transmitter apparatus sends the S first signals through a same channel.

Manner 4

In manner 4, the S signals A are signals obtained through source encoding, channel encoding, and modulation.

In an implementation of manner 4, the S second signals obtained by processing the S signals A through the S corresponding first modules are signals obtained through source encoding, channel encoding, and modulation.

Optionally, the S first signals may be processed through subsequent up-conversion or down-conversion, and the S processed first signals are sent through a same channel.

In another implementation of manner 4, the S first signals obtained by processing the S signals A through the S corresponding first modules are signals obtained through source encoding, channel encoding, modulation, and up-conversion or down-conversion. Then, the transmitter apparatus sends the S first signals through a same channel.

Manner 5

In manner 5, the S signals A are signals obtained through source encoding, channel encoding, modulation, and up-conversion or down-conversion.

In an implementation of manner 5, the S first signals obtained by processing the S signals A through the S corresponding first modules are signals obtained through source encoding, channel encoding, modulation, and up-conversion or down-conversion. Then, the transmitter apparatus sends the S first signals through a same channel.

According to a sixth aspect, a model transmission method is provided, applied to a receiver apparatus or a chip in a receiver apparatus. The method includes: receiving a second signal, where the second signal is associated with N first models, and the N first models correspond to N first tasks; and obtaining a target model based on the second signal, where the target model corresponds to a second task, and the second task is different from the first tasks.

According to the solution in this embodiment of this application, the receiver apparatus receives the second signal sent by a transmitter apparatus, to obtain the target model. Optionally, the second signal is obtained by superimposing N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

With reference to the sixth aspect, in some implementations of the sixth aspect, the model transmission method further includes: sending fusion auxiliary information, where the fusion auxiliary information includes an external feature value of the target model.

Specifically, the external feature value of the model includes one or more of the following information: neural network computation graph information, optimizer information, and hyperparameter information.

According to a seventh aspect, a model transmission method is provided, applied to a system in which a transmitter apparatus performs model transmission to a receiver apparatus. The method includes: obtaining, by the transmitter apparatus, information about N first models and fusion auxiliary information, determining N first signals based on the information about the N first models and the fusion auxiliary information, and sending the N first signals, where the N first models correspond to N first tasks, N is an integer greater than or equal to 2, the fusion auxiliary information of the N first models includes an external feature value of a target model, the target model corresponds to a second task, and the second task is different from the first tasks; and receiving, by the receiver apparatus, a second signal sent by the transmitter apparatus, and parsing the second signal to obtain the target model, where the second signal is obtained based on the N first signals.

According to the solution in this embodiment of this application, the transmitter apparatus obtains the information about the N first models and the fusion auxiliary information, processes the information about the N first models and the fusion auxiliary information based on first modules to obtain the N first signals, and then sends the N first signals. Then, the receiver apparatus may receive the second signal corresponding to the target model, where the second signal is obtained by superimposing the N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

With reference to the seventh aspect, in some implementations of the seventh aspect, the N first signals are obtained by the first modules in the transmitter apparatus by processing the information about the N first models and the fusion auxiliary information.

With reference to the seventh aspect, in some implementations of the seventh aspect, the second signal is obtained by superimposing the N first signals on the channel.

With reference to the seventh aspect, in some implementations of the seventh aspect, the first modules are obtained through training based on training data, the training data includes M first training signals and the target model, the M first training signals are in a one-to-one correspondence with M training models, the target model can meet a task corresponding to the M training models, and M is an integer greater than or equal to 2.

With reference to the seventh aspect, in some implementations of the seventh aspect, the first modules are determined based on a parameter of a channel for sending the N first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the seventh aspect, in some implementations of the seventh aspect, a first module corresponding to an $i^{th}$ model in the N first models is determined based on information about at least one first model in the N first models other than the $i^{th}$ model in the first models.

With reference to the seventh aspect, in some implementations of the seventh aspect, the model transmission method further includes: obtaining, by the transmitter apparatus, M original models, and inputting each first training signal into a corresponding original model, to obtain M second training signals, where the M second training signals are superimposed on a same channel to obtain a third training signal. The third training signal corresponds to an intermediate model, parameters of the M original models are adjusted based on a deviation between the intermediate model and the target model to obtain a model library, and the first modules are obtained from the model library. The M original models are in a one-to-one correspondence with the M first training signals, M is an integer greater than or equal to 2, the model library includes an adjusted original model, and a deviation between an adjusted intermediate model and the target model falls within a preset range.

According to the solution in this embodiment of this application, the first model may be obtained through model training, to help superimpose the N first signals on the channel, and then obtain the second signal corresponding to the target model.

With reference to the seventh aspect, in some implementations of the seventh aspect, the model transmission method further includes: sending the fusion auxiliary information.

With reference to the seventh aspect, in some implementations of the seventh aspect, the fusion auxiliary information is from a receiver apparatus of the N first signals; or the fusion auxiliary information is from a server that provides a service for a receiver apparatus of the N first signals.

Optionally, the information about the N first models is carried in N signals A, and the N first models are in a one-to-one correspondence with the N signals A.

Specifically, in the model transmission method in this embodiment of this application, a process in which the N first modules process the N signals A corresponding to the N first models may include one or more of the following manners.

In this embodiment of this application, the N signals A may be analog signals or digital signals.

Manner 1

In manner 1, the N signals A are signals on which source encoding, channel encoding, modulation, and up-conversion or down-conversion are not performed.

In an implementation of manner 1, the N first signals obtained by processing the N signals A through N pieces of corresponding processing are signals on which source encoding, channel encoding, modulation, and up-conversion or down-conversion are not performed.

Optionally, the N first signals may be processed through subsequent source encoding, channel encoding, modulation, and up-conversion or down-conversion, and the N processed first signals are sent through a same channel.

In another implementation of manner 1, the N first signals obtained by processing the N signals A through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 1, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 1, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 1, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 2

In manner 2, the N signals A are signals obtained through source encoding.

In an implementation of manner 2, the N first signals obtained by processing the N first signals through the N corresponding first modules are signals obtained through source encoding.

Optionally, the N first signals may be processed through subsequent channel encoding, modulation, and up-conversion or down-conversion, and the N processed first signals are sent through a same channel.

In another implementation of manner 2, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 2, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 2, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 3

In manner 3, the N signals A are signals obtained through source encoding and channel encoding.

In an implementation of manner 3, the N first signals obtained by processing the N signals A through the N corresponding first modules are signals obtained through source encoding and channel encoding.

Optionally, the N first signals may be processed through subsequent modulation and up-conversion or down-conversion, and the N processed first signals are sent through a same channel.

In another implementation of manner 3, the N first signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 3, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 4

In manner 4, the N signals A are signals obtained through source encoding, channel encoding, and modulation.

In an implementation of manner 4, the N second signals obtained by processing the N signals A through the N corresponding first modules are signals obtained through source encoding, channel encoding, and modulation.

Optionally, the N first signals may be processed through subsequent up-conversion or down-conversion, and the N processed first signals are sent through a same channel.

In another implementation of manner 4, the N first signals obtained by processing the N signals A through the N corresponding first modules are signals obtained through source encoding, channel encoding, modulation, and up-conversion or down-conversion. Then, the transmitter apparatus sends the N first signals through a same channel.

Manner 5

In manner 5, the N signals A are signals obtained through source encoding, channel encoding, modulation, and up-conversion or down-conversion.

In an implementation of manner 5, the N first signals obtained by processing the N signals A through the N corresponding first modules are signals obtained through source encoding, channel encoding, modulation, and up-conversion or down-conversion. Then, the transmitter apparatus sends the N first signals through a same channel.

According to an eighth aspect, a model transmission method is provided, applied to a system in which at least two transmitter apparatuses perform model transmission to one receiver apparatus. The method includes: obtaining, by a first transmitter apparatus, S first signals, where the S first signals are in a one-to-one correspondence with S first models, each first signal is used to carry information about a corresponding first model, the information about the first model includes an external feature value of the model and/or a parameter of the model, and S is an integer greater than or equal to 1; obtaining S second models, where the S second models are in a one-to-one correspondence with the S first models, the S second models are obtained through training based on training data, the training data includes M first training signals and a target model, the M first training signals correspond to M training models, each first training signal is a signal of a corresponding training model, the target model can meet services corresponding to the M training models, M is an integer greater than or equal to 2, the M services corresponding to the M first training models include N services corresponding to the S first models, and a first model and a second model that correspond to each other are corresponding to a same service; and processing the N first signals based on the S second models to obtain S second signals, where an $s^{th}$ second signal in the S second signals is a signal obtained by processing an $s^{th}$ first signal based on an $s^{th}$ second model, the $s^{th}$ first signal is a signal of a first model corresponding to the $s^{th}$ second model, and $s \in [1, S]$;

obtaining, by a second transmitter apparatus, K first signals, where the K first signals are in a one-to-one correspondence with K first models, each first signal is used to carry information about a corresponding first model, the information about the first model includes an external feature value of the model and/or a parameter of the model, and K is an integer greater than or equal to 1; obtaining K second models, where the K second models are in a one-to-one correspondence with the K first models, the K second models are obtained through training based on the training data, the training data includes the M first training signals and the target model, the M first training signals correspond to the M training models, each first training signal is a signal of a corresponding training model, the target model can meet the services corresponding to the M training models, M is an integer greater than or equal to 2, the M services corresponding to the M first training signals include N services corresponding to the K first models, and a first model and a second model that correspond to each other are corresponding to a same service; processing the N first signals based on the K second models to obtain K second signals, where a $k^{th}$ second signal in the K second signals is a signal obtained by processing a $k^{th}$ first signal based on a $k^{th}$ second model, the $k^{th}$ first signal is a signal of a first model corresponding to the $k^{th}$ second model, $k \in [1, K]$, and an intersection set of the K first models and the S first models is an empty set; and

obtaining, by a receiver apparatus, a third signal, where the third signal is obtained based on N second signals.

According to the solution in this embodiment of this application, a plurality of transmitter apparatuses may obtain N first signals corresponding to N first models (for example, when N=2, the first transmitter apparatus may obtain the S first signals corresponding to the S first models in the N first models, and the second transmitter apparatus may obtain the K first signals corresponding to the K first models in the N first models, where the intersection set of the K first models and the S first models is an empty set), process the N first signals based on N second models to obtain N second signals (for example, when N=2, the S first signals corresponding to the first transmitter apparatus are processed through corresponding second models to obtain the S second signals, and the K first signals corresponding to the second transmitter apparatus are processed through corresponding second models to obtain the K second signals), and then send the N second signals through a first channel. Then, the receiver apparatus may receive the third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

The external feature value of the model includes one or more of the following information: neural network computation graph information, optimizer information, and hyperparameter information.

With reference to the eighth aspect, in some implementations of the eighth aspect, the obtaining N second models includes: obtaining the N second models based on a parameter of a channel for sending the N second signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the eighth aspect, in some implementations of the eighth aspect, the obtaining N second models further includes: determining, based on information about at least one first model other than an $i^{th}$ first model in the N first models, a second model corresponding to the $i^{th}$ first model, where $i \in [1, N]$.

With reference to the eighth aspect, in some implementations of the eighth aspect, the third signal is obtained by superimposing the N second signals on the channel.

With reference to the eighth aspect, in some implementations of the eighth aspect, the model transmission method further includes: obtaining, by the transmitter apparatus, M original models, where the M original models are in a one-to-one correspondence with the M first training signals, and M is an integer greater than or equal to 2; inputting, by the transmitter apparatus, each first training signal into a corresponding original model, to obtain M second training signals; superimposing the M second training signals on a same channel to obtain a third training signal; parsing the third training signal to obtain an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the N second models from the model library.

According to the solution in this embodiment of this application, the second model that meets a task requirement is obtained through model training, to superimpose the N second signals on the channel, and further obtain the third signal corresponding to the target model.

It should be understood that the parameter of the model may include a weight matrix, a weight vector, a bias matrix, and a bias vector.

Specifically, in the model transmission method in this embodiment of this application, a process in which the N second models process the N first signals corresponding to the N first models may include one or more of the following manners.

In this embodiment of this application, the N first signals may be analog signals or digital signals.

Manner 1

In manner 1, the N first signals are signals on which source encoding, channel encoding, modulation, and up-conversion or down-conversion are not performed.

In an implementation of manner 1, the N second signals obtained by processing the N first signals through the N corresponding second models are signals on which source encoding, channel encoding, modulation, and up-conversion or down-conversion are not performed.

Optionally, the N second signals may be processed through subsequent source encoding, channel encoding, modulation, and up-conversion or down-conversion, and the N processed second signals are sent through a same channel.

In another implementation of manner 1, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 1, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 1, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 1, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 2

In manner 2, the N first signals are signals obtained through source encoding.

In an implementation of manner 2, the N second signals obtained by processing the N first signals through the N corresponding second models are signals obtained through source encoding.

Optionally, the N second signals may be processed through subsequent channel encoding, modulation, and up-conversion or down-conversion, and the N processed second signals are sent through a same channel.

In another implementation of manner 2, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 2, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 2, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 3

In manner 3, the N first signals are signals obtained through source encoding and channel encoding.

In an implementation of manner 3, the N second signals obtained by processing the N first signals through the N corresponding second models are signals obtained through source encoding and channel encoding.

Optionally, the N second signals may be processed through subsequent modulation and up-conversion or down-conversion, and the N processed second signals are sent through a same channel.

In another implementation of manner 3, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 3, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 4

In manner 4, the N first signals are signals obtained through source encoding, channel encoding, and modulation.

In an implementation of manner 4, the N second signals obtained by processing the N first signals through the N corresponding second models are signals obtained through source encoding, channel encoding, and modulation.

Optionally, the N second signals may be processed through subsequent up-conversion or down-conversion, and the N processed second signals are sent through a same channel.

In another implementation of manner 4, the N second signals obtained by processing the N first signals through the N corresponding second models are signals obtained through source encoding, channel encoding, modulation, and up-conversion or down-conversion. Then, the transmitter apparatus sends the N second signals through a same channel.

Manner 5

In manner 5, the N first signals are signals obtained through source encoding, channel encoding, modulation, and up-conversion or down-conversion.

In an implementation of manner 5, the N second signals obtained by processing the N first signals through the N corresponding second models are signals obtained through source encoding, channel encoding, modulation, and up-conversion or down-conversion. Then, the transmitter apparatus sends the N second signals through a same channel.

With reference to the eighth aspect, in some implementations of the eighth aspect, the model transmission method further includes: receiving first information, where the first information is used to determine the N first models.

The first information is from a receiver apparatus of the second signals, or the first information is from a server that provides a service for a receiver apparatus of the second signals. The first information includes one or more of the following: neural network computation graph information, optimizer information, and hyperparameter information.

According to a ninth aspect, a model transmission system is provided, including: a transmitter apparatus, configured to obtain information about N first models and fusion auxiliary information, determine N first signals based on the information about the N first models and the fusion auxiliary information, and send the N first signals, where the N first models correspond to N first tasks, N is an integer greater than or equal to 2, the fusion auxiliary information of the N first models includes an external feature value of a target model, the target model corresponds to a second task, and the second task is different from the first tasks; and

a receiver apparatus, configured to receive a second signal, and parse the received second signal to obtain the target model, where the second signal is obtained based on the N first signals.

According to the solution in this embodiment of this application, one transmitter apparatus obtains the N first models and the fusion auxiliary information, processes the information about the N first models and the fusion auxiliary information based on first modules to obtain the N first signals, and then sends the N first signals. Then, the receiver apparatus may receive the second signal corresponding to the target model, where the second signal is obtained by superimposing the N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

According to a tenth aspect, a model transmission system is provided, including: a first transmitter apparatus, configured to obtain information about S first models in N first models and first fusion auxiliary information, determine S first signals based on the information about the S first models in the N first models and the first fusion auxiliary information, and send the S first signals, where the S models in the N first models correspond to S first tasks, S is an integer greater than or equal to 1, the first fusion auxiliary information includes an external feature value of a target model, the target model corresponds to a second task, and the second task is different from the N first tasks;

a second transmitter apparatus, configured to obtain K first models in the N first models and second fusion auxiliary information, determine K first signals based on information about the K first models in the N first models and the second fusion auxiliary information, and send the K first signals, where the K models in the N first models correspond to K first tasks, K is an integer greater than or equal to 1, the second fusion auxiliary information includes the external feature value of the target model, the target model corresponds to the second task, the second task is different from the N first tasks, and an intersection set of the S first models and the K first models is an empty set; and

a receiver apparatus, configured to receive a second signal, and parse the received second signal to obtain the target model, where the second signal is obtained based on the S first signals and the K first signals.

According to the solution in this embodiment of this application, a plurality of transmitter apparatuses may obtain information about the N first models and fusion auxiliary information (for example, when N=2, the first transmitter apparatus may obtain the S first models in the N first models and the first fusion auxiliary information, and the second transmitter apparatus may obtain the K first models in the N first models and the second fusion auxiliary information, where the intersection set of the K first models and the S first models is an empty set), process the information about the N first models and the fusion auxiliary information based on N first modules to obtain N first signals (for example, when N=2, the information about the S first models and the first fusion auxiliary information that are corresponding to the first transmitter apparatus are processed through corresponding first modules to obtain the S first signals, and the information about the K first models and the second fusion auxiliary information that are corresponding to the second transmitter apparatus are processed through corresponding first modules to obtain the K first signals), and then send the N first signals. Then, the receiver apparatus may receive the second signal corresponding to the target model, where the second signal is obtained based on the N first signals. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

With reference to the ninth aspect and the tenth aspect, in some implementations of the ninth aspect and the tenth aspect, the target model corresponds to the second task, and the second task is different from the N first tasks.

With reference to the ninth aspect and the tenth aspect, in some implementations of the ninth aspect and the tenth aspect, the N first signals are obtained through superimposition on a channel.

It should be understood that, in this embodiment of this application, the first fusion auxiliary information and the second fusion auxiliary information may be the same or may be different. When the first fusion auxiliary information is the same as the second fusion auxiliary information, both the first fusion auxiliary information and the second fusion auxiliary information may indicate the external feature value of the target model. When the first fusion auxiliary information is different from the second fusion auxiliary information, the first fusion auxiliary information indicates a first subset of the external feature value of the target model, the second fusion auxiliary information indicates a second subset of the external feature value of the target model, the first subset is different from the second subset, and the external feature value of the target model is a union set of the first subset and the second subset.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

Specifically, in a process in which one transmitter apparatus performs model transmission to one receiver apparatus, the N first signals are obtained by first modules by processing the information about the N first models and the fusion auxiliary information. In a process in which a plurality of transmitter apparatuses, for example, two transmitter apparatuses, perform model transmission to one receiver apparatus, the S first signals are obtained by first modules by processing the information about the S first models in the S first models and the first fusion auxiliary information, and the K first signals are obtained by first modules by processing the information about the K first models in the K first models and the second fusion auxiliary information.

With reference to the ninth aspect and the tenth aspect, in some implementations of the ninth aspect and the tenth aspect, the first modules are obtained through training based on training data, the training data includes M first training signals and the target model, the M first training signals are in a one-to-one correspondence with M training models, the target model can meet a task corresponding to the M training models, and M is an integer greater than or equal to 2.

With reference to the ninth aspect and the tenth aspect, in some implementations of the ninth aspect and the tenth aspect, the first modules are determined based on a parameter of a channel for sending the N first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

The external feature value of the model includes one or more of the following information: neural network computation graph information, optimizer information, and hyperparameter information.

With reference to the ninth aspect and the tenth aspect, in some implementations of the ninth aspect and the tenth aspect, a first module corresponding to an $i^{th}$ model in the N first models is determined based on information about at least one first model in the N first models other than the $i^{th}$ model in the first models.

With reference to the ninth aspect and the tenth aspect, in some implementations of the ninth aspect and the tenth aspect, the transmitter apparatus is further configured to obtain M original models, input each first training signal into a corresponding original model to obtain M second training signals, and superimpose the M second training signals on a same channel to obtain a third training signal. The third training signal corresponds to an intermediate model, parameters of the M original models are adjusted based on a deviation between the intermediate model and the target model to obtain a model library, and the first modules are obtained from the model library. The M original models are in a one-to-one correspondence with the M first training signals, M is an integer greater than or equal to 2, the model library includes an adjusted original model, and a deviation between an adjusted intermediate model and the target model falls within a preset range.

According to the solution in this embodiment of this application, the first model may be obtained through model training, to help superimpose the N first signals on the channel, and then obtain the second signal corresponding to the target model.

With reference to the ninth aspect and the tenth aspect, in some implementations of the ninth aspect and the tenth aspect, the transmitter apparatus is further configured to send the fusion auxiliary information to the receiver apparatus.

With reference to the ninth aspect and the tenth aspect, in some implementations of the ninth aspect and the tenth aspect, the fusion auxiliary information is from the receiver apparatus, or the fusion auxiliary information is from a server that provides a service for the receiver apparatus.

According to an eleventh aspect, a model transmission system is provided, including: a transmitter apparatus, configured to: obtain N first signals, process the N first signals based on N second models to obtain N second signals, and send the N second signals through a first channel, where the N first signals are in a one-to-one correspondence with the N first models, the N second models are in a one-to-one correspondence with the N first models, each first signal is used to carry information about a corresponding first model, the information about the first model includes an external feature value of the model and/or a parameter of the model, the N second models are obtained through training based on training data, the training data includes M first training signals and a target model, the M first training signals correspond to M training models, each first training signal is a signal of a corresponding training model, the target model can meet services corresponding to the M training models, the M services corresponding to the M first training models include N services corresponding to the N first models, an $n^{th}$ second signal in the N second signals is a signal obtained by processing an $n^{th}$ first signal based on an $n^{th}$ second model, the $n^{th}$ first signal is a signal of a first model corresponding to the $n^{th}$ second model, the N first signals are in a one-to-one correspondence with the N first models, a first model and a second model that correspond to each other are corresponding to a same service, $n \in [1, N]$, N is an integer greater than or equal to 2, and M is an integer greater than or equal to 2; and

a receiver apparatus, configured to receive a signal through the first channel, and parse the received signal to obtain a third model.

According to the solution in this embodiment of this application, one transmitter apparatus obtains the N first signals corresponding to the N first models, processes the N first signals based on the N second models to obtain the N second signals, and then sends the N second signals through the first channel. Then, one receiver apparatus corresponding to one transmitter apparatus may receive a third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

According to a twelfth aspect, a model transmission system is provided, including: a first transmitter apparatus, configured to obtain S first signals corresponding to S first models in N first models, process the S first signals based on S second models in N second models to obtain S second signals, and send the S second signals through a first channel, where the S first signals are in a one-to-one correspondence with the S first models, the S second models are in a one-to-one correspondence with the S first models, each first signal is used to carry information about a corresponding first model, the information about the first model includes an external feature value of the model and/or a parameter of the model, a first model and a second model that correspond to each other are corresponding to a same service, and S is an integer greater than or equal to 1;

a second transmitter apparatus, configured to obtain K first signals corresponding to K first models in the N first models, process the K first signals based on K second models in the N second models to obtain K second signals, and send the K second signals through the first channel, where the K first signals are in a one-to-one correspondence with the K first models, each first signal is used to carry information about a corresponding first model, the information about the first model includes an external feature value of the model and/or a parameter of the model, the K second models are in a one-to-one correspondence with the K first models, a first model and a second model that correspond to each other are corresponding to a same service, K is an integer greater than or equal to 1, and an intersection set of the K first models and the S first models is an empty set, where the N second models are in a one-to-one correspondence with the N first models, the N second models are obtained through training based on training data, the training data includes M first training signals and a target model, the M first training signals correspond to M training models, each first training signal is a signal of a corresponding training model, the target model can meet services corresponding to the M training models, the M services corresponding to the M first training models include N services corresponding to the N first models, an $n^{th}$ second signal in the N second signals is a signal obtained by processing an $n^{th}$ first signal based on an $n^{th}$ second model, the $n^{th}$ first signal is a signal of a first model corresponding to the nth second model, the N first signals are in a one-to-one correspondence with the N first models, a first model and a second model that correspond to each other are corresponding to a same service, $n \in [1, N]$, N is an integer greater than or equal to 2, and M is an integer greater than or equal to 2; and

a receiver apparatus, configured to receive a signal through the first channel, and parse the received signal to obtain a third model.

According to the solution in this embodiment of this application, a plurality of transmitter apparatuses may obtain N first signals corresponding to N first models (for example, when N=2, the first transmitter apparatus may obtain the S first signals corresponding to the S first models in the N first models, and the second transmitter apparatus may obtain the K first signals corresponding to the K first models in the N first models, where the intersection set of the K first models and the S first models is an empty set), process the N first signals based on N second models to obtain N second signals (for example, when N=2, the S first signals corresponding to the first transmitter apparatus are processed through corresponding second models to obtain the S second signals, and the K first signals corresponding to the second transmitter apparatus are processed through corresponding second models to obtain the K second signals), and then send the N second signals through the first channel. Then, the receiver apparatus may receive the third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver for the neural network models can be saved to some extent.

With reference to the eleventh aspect and the twelfth aspect, in some implementations of the eleventh aspect and the twelfth aspect, the obtaining N second models includes: obtaining the N second models based on a parameter of a channel for sending the N second signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

The external feature value of the model includes one or more of the following information: neural network computation graph information, optimizer information, and hyperparameter information.

With reference to the eleventh aspect and the twelfth aspect, in some implementations of the eleventh aspect and the twelfth aspect, the obtaining N second models further includes: determining, based on a parameter of at least one first model other than an ith first model in the N first models, a second model corresponding to the ith first model, where $i \in [1, N]$.

With reference to the eleventh aspect and the twelfth aspect, in some implementations of the eleventh aspect and the twelfth aspect, the model transmission method further includes: obtaining M original models, where the M original models are in a one-to-one correspondence with the M first training signals, and M is an integer greater than or equal to 2; inputting each first training signal into a corresponding original model, to obtain M second training signals; superimposing the M second training signals on a same channel to obtain a third training signal; parsing the third training signal to obtain an intermediate model; adjusting parameters of the M original models based on a deviation between the intermediate model and the target model, to obtain a model library, where the model library includes an adjusted original model, and a deviation between an adjusted intermediate model and the target model falls within a preset range; and obtaining the N second models from the model library.

It should be understood that the parameter of the model may include a weight matrix, a weight vector, a bias matrix, and a bias vector.

With reference to the eleventh aspect and the twelfth aspect, in some implementations of the eleventh aspect and the twelfth aspect, the model transmission method further includes: receiving first information, where the first information is used to determine the N first models.

The first information is from a receiver apparatus of the second signals, or the first information is from a server that provides a service for a receiver apparatus of the second signals. The first information includes one or more of the following: neural network computation graph information, optimizer information, and hyperparameter information.

According to a thirteenth aspect, a model transmission apparatus is provided, including:

an obtaining unit, configured to obtain information about N first models and fusion auxiliary information, where the fusion auxiliary information includes an external feature value of a target model, and the target model corresponds to a second task;

a processing unit, configured to determine N first signals based on the information about the N first models and the fusion auxiliary information, and send the N first signals, where the N first models correspond to N first tasks, N is an integer greater than or equal to 2, and the second task is different from the first tasks; and

a sending unit, configured to send the N first signals to a receiver apparatus.

According to the solution in this embodiment of this application, the transmitter apparatus obtains the information about the N first models and the fusion auxiliary information, processes the information about the N first models and the N fusion auxiliary information based on first modules to obtain the N first signals, and then sends the N first signals. Then, the receiver apparatus may receive a second signal corresponding to the target model, where the second signal is obtained by superimposing the N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

With reference to the thirteenth aspect, in some implementations of the thirteenth aspect, the processing unit determines the N first signals through the first modules.

With reference to the thirteenth aspect, in some implementations of the thirteenth aspect, the first modules are determined based on a parameter of a channel for sending the N first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the thirteenth aspect, in some implementations of the thirteenth aspect, a first module corresponding to an $i^{th}$ model in the N first models is determined based on information about at least one first model in the N first models other than the $i^{th}$ model in the first models.

With reference to the thirteenth aspect, in some implementations of the thirteenth aspect, the processing unit is further configured to: obtain M original models, where the M original models are in a one-to-one correspondence with the M first training signals, and M is an integer greater than or equal to 2; input each first training signal into a corresponding original model, to obtain M second training signals; superimpose the M second training signals on a same channel to obtain a third training signal; parse the third training signal to obtain an intermediate model; adjust parameters of the M original models based on a deviation between the intermediate model and the target model, to obtain a model library, where the model library includes an adjusted original model, and a deviation between an adjusted intermediate model and the target model falls within a preset range; and obtain the N first modules from the model library.

With reference to the thirteenth aspect, in some implementations of the thirteenth aspect, the sending unit is further configured to send the fusion auxiliary information to the receiver apparatus.

With reference to the thirteenth aspect, in some implementations of the thirteenth aspect, the fusion auxiliary information is from the receiver apparatus, or the fusion auxiliary information is from a server that provides a service for the receiver apparatus.

It should be understood that, if the information about the N first models and the fusion auxiliary information are received from another apparatus, the obtaining unit is a receiving unit or a transceiver unit; or if the information about the N first models and the fusion auxiliary information are locally obtained (for example, determined) by the model transmission apparatus, the obtaining unit may be a processing unit; or if one type of information in the information about the N first models and the fusion auxiliary information is received from another apparatus, and the other type of information is locally obtained, the obtaining unit may be a function integrated unit of a receiving unit and a processing unit.

According to a fourteenth aspect, a model transmission apparatus is provided, including:

a processing unit, configured to: obtain N first signals, process the N first signals based on N second models to obtain N second signals, and send the N second signals through a first channel, where the N first signals are in a one-to-one correspondence with the N first models, the N second models are in a one-to-one correspondence with the N first models, each first signal is used to carry information about a corresponding first model, the information about the first model includes an external feature value of the model and/or a parameter of the model, the N second models are obtained through training based on training data, the training data includes M first training signals and a target model, the M first training signals correspond to M training models, each first training signal is a signal of a corresponding training model, the target model can meet services corresponding to the M training models, the M services corresponding to the M first training models include N services corresponding to the N first models, an $n^{th}$ second signal in the N second signals is a signal obtained by processing an $n^{th}$ first signal based on an $n^{th}$ second model, the $n^{th}$ first signal is a signal of a first model corresponding to the $n^{th}$ second model, the N first signals are in a one-to-one correspondence with the N first models, a first model and a second model that correspond to each other are corresponding to a same service, $n \in [1, N]$, N is an integer greater than or equal to 2, and M is an integer greater than or equal to 2; and

a sending unit, configured to send the N second signals to a receiver apparatus through a same channel.

According to the solution in this embodiment of this application, first modules in the transmitter apparatus may obtain the N first signals corresponding to the N first models, and process the N first signals based on the N second models to obtain the N second signals, and then a sending module sends the N second signals through the first channel. Then, the receiver apparatus may receive a third signal corresponding to the target model, where the third signal is obtained by superimposing the N second signals on the first channel. According to the foregoing model transmission method, joint transmission of a plurality of different neural network models can be implemented, resource overheads and a latency of the plurality of neural network models in a transmission process can be reduced, and storage space of the receiver for the neural network models can be saved to some extent.

The external feature value of the model includes one or more of the following information: neural network computation graph information, optimizer information, and hyperparameter information.

With reference to the fourteenth aspect, in some implementations of the fourteenth aspect, the N second models are determined based on a parameter of the first channel.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the fourteenth aspect, in some implementations of the fourteenth aspect, a second model corresponding to an $i^{th}$ first model in the N first models is determined based on information about at least one first model other than the $i^{th}$ first model in the N first models, and $i \in [1, N]$.

With reference to the fourteenth aspect, in some implementations of the fourteenth aspect, the processing unit is further configured to obtain M original models; input each first training signal into a corresponding original model to obtain M second training signals; superimpose the M second training signals on a same channel to obtain a third training signal; parse the third training signal to obtain an intermediate model; adjust parameters of the M original models based on a deviation between the intermediate model and the target model to obtain a model library; and obtain the N second models from the model library, where the M original models are in a one-to-one correspondence with the M first training signals, M is an integer greater than or equal to 2, the model library includes an adjusted original model, and a deviation between an adjusted intermediate model and the target model falls within a preset range.

With reference to the fourteenth aspect, in some implementations of the fourteenth aspect, the obtaining unit is further configured to receive first information, where the first information is used to determine the N first models, and the first information is from the receiver apparatus, or the first information is from a server that provides a service for the receiver apparatus.

According to a fifteenth aspect, a model transmission apparatus is provided. The apparatus includes:

an obtaining unit, configured to obtain information about S first models in N first models and first fusion auxiliary information, where the first fusion auxiliary information includes an external feature value of a target model, and the target model corresponds to a second task;

a processing unit, configured to determine S first signals based on the information about the S first models and the first fusion auxiliary information, where the S first models correspond to S first tasks, and the second task is different from the S first tasks; and

a sending unit, configured to send the S first signals to a receiver apparatus.

According to the solution in this embodiment of this application, the transmitter apparatus obtains the information about the S first models in the N first models and the first fusion auxiliary information, processes the information about the S first models and the first fusion auxiliary information based on first modules to obtain the S first signals, and then sends the S first signals. When S is less than N, one or more other transmitters also send a first signal in N-S first signals. Then, the receiver apparatus may receive a second signal corresponding to the target model. The second signal is obtained by superimposing, on a channel, N first signals including the S first signals. According to the foregoing model transmission method, joint transmission of a plurality of different neural network models can be implemented, the method is also applicable to a scenario in which transmitter apparatuses are distributed, resource overheads and a latency of the plurality of neural network models in a transmission process can be reduced, and storage space of the receiver apparatus for the neural network models can be saved to some extent.

Specifically, information about the first model or information about the target model includes an external feature value of the model and/or a parameter of the model, the external feature value of the model includes one or more of the following information: neural network computation graph information, optimizer information, and hyperparameter information, and the parameter of the model includes one or more of the following parameters: a weight matrix, a weight vector, a bias matrix, and a bias vector.

It should be understood that in this embodiment of this application, the first fusion auxiliary information may be the external feature value of the target model, or may be a subset of the external feature value of the target model.

With reference to the fifteenth aspect, in some implementations of the fifteenth aspect, the processing unit determines the S first signals through the first modules.

With reference to the fifteenth aspect, in some implementations of the fifteenth aspect, the first modules are obtained through training based on training data, the training data includes M first training signals and the target model, the M first training signals are in a one-to-one correspondence with M training models, the target model can meet a task corresponding to the M training models, and M is an integer greater than or equal to 2.

With reference to the fifteenth aspect, in some implementations of the fifteenth aspect, the first modules are determined based on a parameter of a channel for sending the S first signals.

It should be understood that the parameter of the channel includes one or more of the following: channel state information CSI, a signal-to-noise ratio SNR, and link quality. The channel state information may include a channel quality indicator CQI, a rank indicator RI, and a precoding matrix PMI.

With reference to the fifteenth aspect, in some implementations of the fifteenth aspect, a first module corresponding to an $i^{th}$ model in the S first models is determined based on information about at least one first model in the S first models other than the $i^{th}$ model in the first models.

With reference to the fifteenth aspect, in some implementations of the fifteenth aspect, the processing unit is further configured to: obtain M original models, where the M original models are in a one-to-one correspondence with the M first training signals, and M is an integer greater than or equal to 2; input each first training signal into a corresponding original model, to obtain M second training signals; superimpose the M second training signals on a same channel to obtain a third training signal, where the third training signal corresponds to an intermediate model; adjust parameters of the M original models based on a deviation between the intermediate model and the target model, to obtain a model library, where the model library includes an adjusted original model, and a deviation between an adjusted intermediate model and the target model falls within a preset range; and obtain the first modules from the model library.

With reference to the fifteenth aspect, in some implementations of the fifteenth aspect, the sending unit is further configured to send the first fusion auxiliary information to the receiver apparatus.

With reference to the fifteenth aspect, in some implementations of the fifteenth aspect, the first fusion auxiliary information is from a receiver apparatus of the S first signals; or the first fusion auxiliary information is from a server that provides a service for a receiver apparatus of the S first signals.

According to a sixteenth aspect, a model receiving apparatus is provided. The apparatus includes:

a receiving unit, configured to receive a second signal, where the second signal is associated with first models, and the N first models correspond to N first tasks; and

a processing unit, configured to obtain a target model based on the second signal, where the target model corresponds to a second task, and the second task is different from the first tasks.

According to the solution in this embodiment of this application, the receiver apparatus receives the second signal sent by a transmitter apparatus, to obtain the target model. The second signal is obtained by superimposing N first signals on a channel. According to the foregoing model transmission method, joint transmission of a plurality of different neural network models can be implemented, resource overheads and a latency of the plurality of neural network models in a transmission process can be reduced, and storage space of the receiver apparatus for the neural network models can be saved to some extent.

With reference to the sixteenth aspect, in some implementations of the sixteenth aspect, the model apparatus further includes a sending unit, the sending unit is configured to send fusion auxiliary information to the receiver apparatus, and the fusion auxiliary information includes an external feature value of the target model.

Specifically, the external feature value of the model includes one or more of the following information: neural network computation graph information, optimizer information, and hyperparameter information.

According to a seventeenth aspect, a model transmission apparatus is provided. The apparatus includes: a memory, configured to store a program; and a processor, configured to execute the program stored in the memory. When the program stored in the memory is executed, the processor is configured to perform the method in any one of the first aspect and the implementations of the first aspect.

According to an eighteenth aspect, a model transmission apparatus is provided. The apparatus includes: a memory, configured to store a program; and a processor, configured to execute the program stored in the memory. When the program stored in the memory is executed, the processor is configured to perform the method in any one of the second aspect and the implementations of the second aspect.

According to a nineteenth aspect, a model transmission apparatus is provided. The apparatus includes: a memory, configured to store a program; and a processor, configured to execute the program stored in the memory. When the program stored in the memory is executed, the processor is configured to perform the method in any one of the third aspect and the implementations of the third aspect.

According to a twentieth aspect, a model transmission apparatus is provided. The apparatus includes: a memory, configured to store a program; and a processor, configured to execute the program stored in the memory. When the program stored in the memory is executed, the processor is configured to perform the method in any one of the fourth aspect and the implementations of the fourth aspect.

According to a twenty-first aspect, a model transmission apparatus is provided. The apparatus includes: a memory, configured to store a program; and a processor, configured to execute the program stored in the memory. When the program stored in the memory is executed, the processor is configured to perform the method in any one of the fifth aspect and the implementations of the fifth aspect.

According to a twenty-second aspect, a model transmission apparatus is provided. The apparatus includes: a memory, configured to store a program; and a processor, configured to execute the program stored in the memory. When the program stored in the memory is executed, the processor is configured to perform the method in any one of the sixth aspect and the implementations of the sixth aspect.

According to a twenty-third aspect, a model transmission apparatus is provided. The apparatus includes: a memory, configured to store a program; and a processor, configured to execute the program stored in the memory. When the program stored in the memory is executed, the processor is configured to perform the method in any one of the seventh aspect and the implementations of the seventh aspect.

According to a twenty-fourth aspect, a model transmission apparatus is provided. The apparatus includes: a memory, configured to store a program; and a processor, configured to execute the program stored in the memory. When the program stored in the memory is executed, the processor is configured to perform the method in any one of the eighth aspect and the implementations of the eighth aspect.

The processor in the seventeenth aspect to the twenty-fourth aspect may be a central processing unit (central processing unit, CPU), or may be a combination of a CPU and a neural-network operation processing unit. The neural-network operation processing unit herein may include a graphics processing unit (graphics processing unit, GPU), a neural-network processing unit (neural-network processing unit, NPU), a tensor processing unit (tensor processing unit, TPU), and the like. The TPU is an artificial intelligence accelerator-specific integrated circuit customized by Google (Google) for machine learning.

According to a twenty-fifth aspect, a computer-readable medium is provided. The computer-readable medium stores program code to be executed by a device, and the program code is used to perform the method in any implementation of the first aspect to the eighth aspect.

According to a twenty-sixth aspect, a computer program product including instructions is provided. When the computer program product runs on a computer, the computer is enabled to perform the method in any implementation of the first aspect to the eighth aspect.

According to a twenty-seventh aspect, a chip is provided. The chip includes a processor and a data interface. The processor reads, through the data interface, instructions stored in a memory, to perform the method in any implementation of the first aspect to the eighth aspect.

Optionally, in an implementation, the chip may further include a memory, the memory stores instructions, the processor is configured to execute the instructions stored in the memory, and when the instructions are executed, the processor is configured to perform the method in any implementation of the first aspect to the eighth aspect.

The chip may be specifically a field programmable gate array (field programmable gate array, FPGA) or an application-specific integrated circuit (application-specific integrated circuit, ASIC).

## BRIEF DESCRIPTION OF DRAWINGS

FIG. 1 is a diagram of an end-to-end communication system implemented based on a neural network;

FIG. 2 is a diagram of an applicable communication system architecture according to an embodiment of this application;

FIG. 3 is a diagram of another example communication system architecture according to an embodiment of this application;

FIG. 4 is a diagram of another example communication system architecture according to an embodiment of this application;

FIG. 5 is a diagram of an example artificial intelligence main framework according to an embodiment of this application;

FIG. 6 is a diagram of an example system architecture 600 according to an embodiment of this application;

FIG. 7 is a diagram of a structure of a convolutional neural network model according to an embodiment of this application;

FIG. 8 is a diagram of a structure of another convolutional neural network model according to an embodiment of this application;

FIG. 9 is a diagram of a hardware structure of a chip according to an embodiment of this application;

FIG. 10 is a diagram of a system architecture 1000 according to an embodiment of this application;

FIG. 11 is a diagram of apparatus deployment for model training according to an embodiment of this application;

FIG. 12 is a schematic flowchart of a model transmission method according to an embodiment of this application;

FIG. 13 is a schematic block flowchart of a model transmission method according to an embodiment of this application;

FIG. 14 is a schematic flowchart of another model transmission method according to an embodiment of this application;

FIG. 15 is a diagram of a structure of a directed graph of a neural network model according to an embodiment of this application;

FIG. 16 is a diagram of a structure of a computation graph of a neural network model according to an embodiment of this application;

FIG. 17 is a diagram of neural network model transmission at a computation graph according to an embodiment of this application;

FIG. 18 is a schematic flowchart of another model transmission method according to an embodiment of this application;

FIG. 19 is a block diagram of an example model transmission apparatus according to an embodiment of this application; and

FIG. 20 is a block diagram of another example model transmission apparatus according to an embodiment of this application.

## DESCRIPTION OF EMBODIMENTS

Technical solutions in embodiments of this application may be applied to various communication systems, for example, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, an LTE frequency division duplex (frequency division duplex, FDD) system, an LTE time division duplex (time division duplex, TDD) system, a 5th generation (5th generation, 5G) communication system or new radio (new radio, NR), a wireless fidelity (wireless fidelity, Wi-Fi) system, three application scenarios: enhanced mobile broadband (enhanced mobile broadband, eMBB), ultra-reliable low-latency communication (ultra-reliable low-latency communication, uRLLC), and enhanced machine type communication (LTE enhanced MTO, eMTC), of a 5G mobile communication system, a communication system that supports convergence of a plurality of wireless technologies, and a 6th generation (6th generation, 6G) communication system that is evolved after 5G.

The technical solutions in embodiments of this application may be further applied to communication systems such as a wireless cellular communication system, a wireless mesh (Mesh) network, and a satellite communication system. When the wireless cellular communication system includes one cellular base station and a plurality of terminal devices, the plurality of terminal devices can assist the cellular base station in artificial intelligence (artificial intelligence, AI) model calculation. When the wireless cellular communication system includes a plurality of cellular base stations and one terminal device, the plurality of cellular base stations can assist the terminal device in AI model calculation. The wireless mesh network includes a cellular macro base station, a micro base station, and a terminal device. The cellular macro base station transmits downlink data to the terminal device in a relay mode through a plurality of micro base stations. The satellite communication system includes a satellite base station and a terminal device.

The terminal in embodiments of this application may be a device having wireless sending and receiving functions, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in

EP 4 521 653 A1

a smart home (smart home), a terminal device in a communication network (for example, 6G) evolved after 5G, or the like. This is not limited in this application.

In embodiments of this application, an apparatus configured to implement a function of a terminal device may be a terminal device, or may be an apparatus that can support the terminal device in implementing the function, for example, a chip system. The apparatus can be installed in the terminal device, or can match the terminal device for use. In embodiments of this application, the chip system may include a chip, or may include a chip and another discrete component.

The network device in embodiments of this application is a device having wireless sending and receiving functions, and is configured to communicate with a terminal device. An access network device may be a node in a radio access network (radio access network, RAN), and may be referred to as a base station, or may be referred to as a RAN node. The access network device may be an evolved NodeB (evolved NodeB, eNB or eNodeB) in LTE, a base station in a 5G network like a gNodeB (gNB), a base station in a public land mobile network (public land mobile network, PLMN) evolved after 5G, a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access node in a Wi-Fi system, a transmitting and receiving point (transmitting and receiving point, TRP), a transmitting point (transmitting point, TP), a mobile switching center, and a device that undertakes a base station function in device-to-device (device-to-device, D2D), vehicle-to-everything (vehicle-to-everything, V2X), or machine-to-machine (machine-to-machine, M2M) communication; or may include a central unit (central unit, CU) and a distributed unit (distributed unit, DU) in a cloud radio access network (cloud radio access network, C-RAN) system, or a network device in an NTN communication system. This is not specifically limited in embodiments of this application.

In embodiments of this application, an apparatus configured to implement a function of a network device may be a network device, or may be an apparatus that can support the network device in implementing the function, for example, a chip system. The apparatus can be installed in the network device, or can match the network device for use. In embodiments of this application, the chip system may include a chip, or may include a chip and another discrete component.

It should be understood that a transmitter device and a receiver device in embodiments of this application may be one or more types of the foregoing terminal devices, or may be one or more types of the foregoing network devices. This is not limited in this application.

The cloud device in embodiments of this application may be a server or a server cluster that serves a receiver device or a transmitter device. The cloud device may also be referred to as a computing node or a cloud computing cluster.

FIG. 2 is a diagram of an example communication system architecture according to an embodiment of this application. As shown in FIG. 2, the communication system architecture is a satellite communication system.

A satellite communication system shown in (a) in FIG. 2 includes devices such as a satellite base station, a terminal device #1, and a terminal device #2. The satellite base station may also be referred to as a satellite. The satellite base station may provide a communication service for the terminal device #1 and the terminal device #2. Specifically, the satellite base station may transmit downlink data to the terminal device #1 and the terminal device #2. The downlink data may be transmitted to the terminal device #1 and the terminal device #2 after undergoing channel encoding, modulation, and mapping. The terminal device #1 and the terminal device #2 may transmit uplink data to the satellite base station. The uplink data may be transmitted to the satellite base station after undergoing channel encoding, modulation, and mapping.

Compared with the communication system shown in (a) in FIG. 2, a satellite communication system shown in (b) in FIG. 2 may further include a terrestrial base station, and the satellite base station may communicate with the terrestrial base station.

The satellite base station may be an uncrewed aerial vehicle, a hot air balloon, a LEO satellite, a MEO satellite, a GEO satellite, or the like. Alternatively, the satellite base station may be a non-terrestrial base station, a non-terrestrial device, or the like. The satellite base station may be used as a network device or a terminal device. The satellite base station may not have a function of a base station, or may have some or all functions of a base station. This is not limited in this application.

It should be understood that quantities of satellite base stations, terrestrial base stations, and terminal devices in FIG. 2 are examples. There may be any quantities of satellite base stations and terminal devices based on a requirement in an actual scenario.

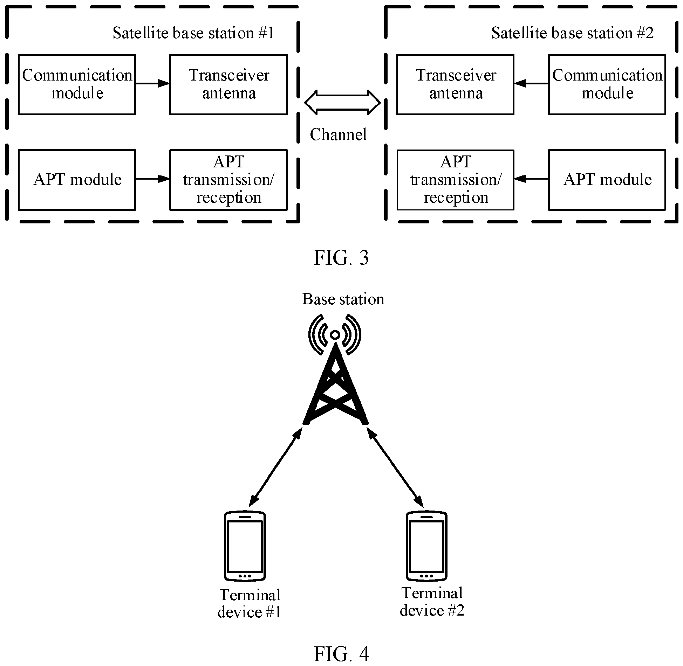

FIG. 3 is a diagram of another example communication system architecture according to an embodiment of this application. The communication system is an inter-satellite link communication system, and may also be referred to as an inter-satellite communication system. Satellites in the communication system may include a communication system and a space beam acquisition, pointing and tracking (acquisition, pointing and tracking, APT) system.

The communication system may include a communication module and a transceiver antenna, is configured to be responsible for inter-satellite information transmission, and is a main body of the inter-satellite communication system. The APT system is configured to be responsible for acquisition, pointing, and tracking between satellites. Acquisition refers to determining and identifying a target in an indeterminate area. An acquisition process includes data guidance and initial pointing of a visual axis in an early stage, scanning in the indeterminate area, and determining existence of a beacon spot in an acquisition field of view, to provide a basis for subsequent tracking. Pointing refers to adjusting a transmitted wave to pointing at a receiving direction, so that a transmitting visual axis and a tracking visual axis of communication need to maintain very precise coaxality during assembling and calibration, or a deviation between a transmitting visual axis and a receiving visual axis need to be corrected by using an advance servo unit. Tracking refers to continuously adjusting pointing and acquisition in an entire communication process. The essence of tracking in a laser space communication system is to implement active photoelectric tracking for a laser beam, to overcome a visual axis wobble caused by relative motion and platform vibration. The purpose of tracking is to stabilize the tracking visual axis within an allowed error range.

In the inter-satellite link communication system, to minimize impact of attenuation and interference on a channel and ensure high confidentiality and a high transmission rate, APT needs to be adjusted in real time to continuously adapt to changes. All existing APT systems are optical systems. Most of existing communication subsystems are optical communication systems, and there are some microwave band systems in which a single high-gain antenna is usually used. The existing APT system and communication subsystem are independent systems.

FIG. 4 is a diagram of another example communication system architecture according to an embodiment of this application. The shown communication system is a wireless cellular communication system. The wireless cellular communication system usually includes cells, each cell includes one base station (base station, BS), and the base station may provide a communication service for a plurality of terminal devices. For example, the cellular communication system shown in FIG. 4 includes devices such as a base station, a terminal device #1, and a terminal device #2. Specifically, the base station may send downlink data to the terminal device, and the downlink data may be encoded through channel encoding. The terminal device may send uplink data to the base station, and the uplink data may also be encoded through channel encoding.

The base station includes a baseband unit (baseband unit, BBU) and a remote radio unit (remote radio unit, RRU). The BBU and the RRU may be placed in different places. For example, the RRU may be placed in a high-traffic area and the BBU is placed in a central equipment room, or the BBU and the RRU are placed in a same equipment room, or the BBU and the RRU may be different components in one rack. It should be understood that the wireless cellular communication system shown in FIG. 4 may include a plurality of base stations, and a coverage area of each base station may include another quantity of terminal devices. This is not limited in embodiments of this application.

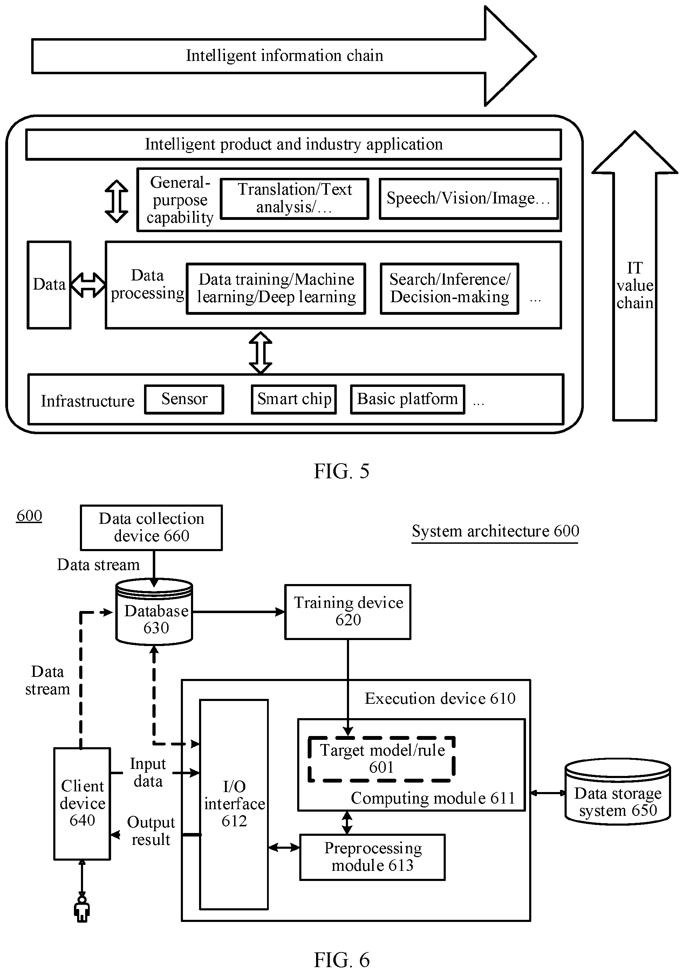

FIG. 5 is a diagram of an example artificial intelligence main framework according to an embodiment of this application. The main framework describes an overall working process of an artificial intelligence system, and is applicable to a general-purpose requirement in the artificial intelligence field.

The following describes in detail the foregoing artificial intelligence main framework from two dimensions: "intelligent information chain" (horizontal axis) and "information technology (information technology, IT) value chain" (vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence".

The "IT value chain" reflects value brought by artificial intelligence to the information technology industry from underlying infrastructure and information (providing and processing technology implementation) of artificial intelligence to an industrial ecological process of a system.

The following further describes in detail submodules in the artificial intelligence framework.

(1) Infrastructure

The infrastructure provides computing capability support for an artificial intelligence system, implements communication with the external real world, and implements support by using a basic platform.

The infrastructure can communicate with the outside by using a sensor, and a computation capability of the infrastructure can be provided by a smart chip.

The smart chip herein may be a hardware acceleration chip such as a central processing unit (central processing unit, CPU), a neural-network model processing unit (neural-network processing unit, NPU), a graphics processing unit (graphics processing unit, GPU), an application-specific integrated circuit (application-specific integrated circuit, ASIC), and a field programmable gate array (field programmable gate array, FPGA).

The basic platform of the infrastructure may include related platforms, for example, a distributed computing framework and a network, for assurance and support, including cloud storage and computing, an interconnection network, and the like.

For example, the infrastructure can communicate with the outside by using the sensor, to obtain data, and then the data is provided for a smart chip in a distributed computing system provided by the basic platform for computing.

(2) Data

Data at an upper layer of the infrastructure indicates a data source in the artificial intelligence field. The data relates to a graph, an image, a speech, and a text, further relates to internet of things data of a device, and includes service data of an existing system and perception data such as force, displacement, a liquid level, a temperature, and humidity.

(3) Data processing

The data processing usually includes a processing manner, for example, data training, machine learning, deep learning, search, inference, or decision-making.

Machine learning and deep learning may perform symbolic and formalized intelligent information modeling, extraction, preprocessing, training, and the like on data.

Training (training) is a computing-intensive operation. Usually, a model needs to be trained by using a large amount of data. Back propagation is used to continuously optimize a parameter of the model, so that the model obtains a specific capability. During training, a fitting status of the model on a dataset is usually placed in the first place.

Inference (inference) is a process in which a human intelligent inference manner is simulated in a computer or an intelligent system, and machine thinking and problem resolving are performed by using formalized information according to an inference control policy. Typical functions are searching and matching.

Decision-making is a process of making a decision after intelligent information is inferred, and usually can provide functions such as classification, sorting, and prediction.

(4) General-purpose capability

After data processing mentioned above is performed on data, some general-purpose capabilities may be further formed based on a data processing result. For example, the general-purpose capabilities may be an algorithm or a general system, for example, translation, text analysis, computer vision processing, speech recognition, and image recognition.

(5) Intelligent product and industry application

The intelligent product and industry application mean a product and an application of an artificial intelligence system in various fields, and are a package of an overall solution of artificial intelligence, so that decision-making for intelligent information is productized and an application is implemented. Application fields thereof mainly include intelligent manufacturing, smart transportation, smart household, intelligent healthcare, intelligent security protection, autonomous driving, a safe city, an intelligent terminal, and the like.

Embodiments of this application may be applied to many fields of artificial intelligence, for example, fields such as intelligent manufacturing, smart transportation, smart household, intelligent healthcare, intelligent security protection, autonomous driving, and a safe city.

Specifically, a method for obtaining a neural network model in embodiments of this application may be specifically applied to fields in which a (deep) neural network model needs to be used, such as autonomous driving, image classification, image retrieval, image semantic segmentation, image quality enhancement, image super-resolution, and natural language processing.

Because embodiments of this application relate to the field of neural networks, for ease of understanding, the following first describes terms and concepts related to the field of neural networks in embodiments of this application.

(1) Artificial intelligence

Artificial intelligence is a theory, a method, a technology, and an application system that simulate and extend human intelligence by using a digital computer or a machine controlled by a digital computer, to perceive an environment, obtain knowledge, and use the knowledge to obtain an optimal result. In other words, artificial intelligence is a branch in computer science, and aims to understand the essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

(2) Edge artificial intelligence

Edge artificial intelligence (edge AI) is one of new fields in the artificial intelligence field, and aims to enable users to perform artificial intelligence processes without worrying about impact caused by privacy leakage or a low data transmission rate. Edge artificial intelligence combines an artificial intelligence technology with edge computing to enable an artificial intelligence algorithm to run on a device that can perform edge computing, so that real-time data processing can be implemented. Edge artificial intelligence can enable the artificial intelligence technology to be more widely used, and enable an intelligent device to quickly respond to an input without accessing a cloud platform.

For example, in a traveling process, an autonomous vehicle needs to continuously scan a surrounding environment and evaluate a current traveling status, and needs to continuously correct a traveling trajectory based on an emergency. In this case, real-time data processing of a vehicle is critical. A vehicle-mounted artificial intelligence system is responsible for data storage, analysis, and processing. An edge artificial intelligence technology is introduced, so that real-time data analysis and processing can be implemented without relying on a cloud computing connection.

(3) Neural network

A neural network (neural network, NN) may also be referred to as an artificial neural network. The neural network may include a neuron, and the neuron may be an arithmetic unit that uses $x_s$ and an intercept 1 as an input. An output of the arithmetic unit may be:

$$h_{W,b}(x) = f(W^T x) = f(\textstyle\sum_{s=1}^{n} W_s\, x_s + b) \qquad (1)$$

s=1, 2, ..., or n, n is a natural number greater than 1, $W_s$ is a weight of $x_s$, and $b$ is a bias of the neuron. $f$ is an activation function (activation functions) of the neuron, and is used to introduce a non-linear feature into the neural network to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(4) Deep neural network

A deep neural network (deep neural network, DNN), also referred to as a multi-layer neural network, may be understood as a neural network having a plurality of hidden layers. The DNN is divided based on locations of different layers. Neural networks in the DNN may be classified into three types: an input layer, a hidden layer, and an output layer. Generally, a first layer is an input layer, a last layer is an output layer, and intermediate layers are all hidden layers. The layers may be fully connected. To be specific, any neuron at an $i^{th}$ layer is connected to any neuron at an $(i+1)^{th}$ layer. Simply, this may be represented by using the following linear relationship:

$$\vec{y} = \alpha(W \cdot \vec{x} + \vec{b}) \qquad (2)$$

$\vec{x}$ is an input vector, $\vec{y}$ is an output vector, $\vec{b}$ is a bias vector, W is a weight matrix (also referred to as a coefficient), and $\alpha$ is an activation function. The operation is performed on an input vector $\vec{x}$ of each hidden layer to obtain an output vector $\vec{y}$. Because the DNN has a large quantity of layers, there are a large quantity of coefficients W and a large quantity of bias vectors b. These parameters are defined as follows in the DNN: The coefficient W is used as an example. It is assumed that in a three-layer DNN, a linear coefficient from a fourth neuron at a second layer to a second neuron at a third layer is defined as $W_{24}^{3}$. The superscript 3 represents a layer at which the coefficient W is located, and the subscript corresponds to an output third-layer index 2 and an input second-layer index 4.

In conclusion, a coefficient from a $k^{th}$ neuron at an $(L-1)^{th}$ layer to a $j^{th}$ neuron at an $L^{th}$ layer is defined as $W_{jk}^{L}$.

It should be noted that there is no parameter at the input layer. In the deep neural network, it can be learned from the universal approximation theorem that any function can be fitted by using the DNN with any precision provided that sufficient hidden layers are given. In other words, more hidden layers enable the network to better depict complex situations in the real world. Theoretically, a model with more parameters has higher complexity and a larger "capacity". This indicates that the model can complete a more complex learning task. Training the deep neural network is a process of learning a weight matrix, and a final objective of training is to obtain weight matrices (weight matrices including vectors of many layers) of all layers of the deep neural network through training.

(5) Convolutional neural network

A convolutional neural network (convolutional neuron network, CNN) is a neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected to only some adjacent-layer neurons. One convolutional layer usually includes several feature planes, and each feature plane may include some neurons that are in a rectangular arrangement. Neurons on a same feature plane share a weight, and the weight shared herein is a convolution kernel. Weight sharing may be understood as that an image information extraction manner is irrelevant to a location. In a training process of the convolutional neural network, a convolution kernel may obtain a proper weight through learning. In addition, benefits directly brought by weight sharing are that connections between layers of the convolutional neural network are reduced, and an overfitting risk is reduced.

(7) Back propagation algorithm

In a training process, a neural network may correct a value of a parameter of a neural network model by using a gradient back propagation (back propagation, BP) algorithm, so that a reconstruction error loss of the neural network model becomes increasingly small. Specifically, an input signal is forward transferred until the error loss is generated in an output, and the parameter of the neural network model is updated through back propagation of information about the error loss, to converge the error loss. The back propagation algorithm is an error-loss-led back propagation motion intended to obtain a parameter such as a weight matrix of an optimal neural network model.

For example, a loss value generated each time the neural network model is trained is transferred forward layer by layer in the neural network model. When the loss value is transferred to each layer, an update amount of a parameter at the layer is calculated (a partial derivative operation). The update amount is related to a gradient (gradient).

(8) Deep learning

Deep learning (deep learning, DL) is a new research direction in the machine learning (machine learning, ML) field. Deep learning is to learn an internal rule and a representation level of sample data. The information obtained in a learning process is helpful for interpreting data such as a text, an image, and a voice. A goal of deep learning is to enable a machine to have analysis and learning capabilities like a human being and recognize data such as a text, an image, and a voice. Deep learning is a complex machine learning algorithm, and has far better effect than previous related technologies in speech and image recognition.

A depth in deep learning refers to a series of consecutive representation layers, and a quantity of layers included in a data model is referred to as a depth of the model. A model feature of deep learning is a neural network that contains a plurality of hidden layers. Underlying features are combined to form more abstract higher-layer features.

Deep learning has made many achievements in search technologies, data mining, machine learning, machine translation, natural language processing, multimedia learning, speeches, recommendation and personalization technologies, and other related fields. Deep learning enables a machine to simulate human activities such as watching, listening, and thinking, and resolves many complex mode recognition problems, so that artificial intelligence related technologies make great progress.

(9) Federated learning

Federated learning (federated learning, FL) enables distributed nodes and a central node to collaborate to efficiently complete model learning tasks while ensuring user data privacy and security. In an FL framework, a dataset exists on a distributed node. To be specific, the distributed node collects a local dataset, performs local training, and reports a local result (model or gradient) obtained through training to the central node. The central node does not have a dataset, is only responsible for fusing training results of the distributed nodes to obtain a global model, and delivers the global model to the distributed nodes. However, because an entire model is periodically fused by using a federated averaging (federated averaging, FedAvg) algorithm in FL, a convergence speed is low, and convergence performance is defective to some extent. In addition, a device that performs FL needs to store and send the entire model, and a requirement on computing, storage, and communication capabilities of the device is relatively high.

(10) Transfer learning

Transfer learning (transfer learning) is a term in machine learning, and refers to impact of one type of learning on another type of learning or impact of learned experience on completion of another activity. Specifically, transfer learning is a learning idea and mode. Transfer learning refers to a learning process in which a model learned in an old field is applied to a new field by using a similarity between data, tasks, or models. A core of transfer learning is to find a similarity between a new problem and an old problem, to smoothly implement knowledge transfer. Transfer is widely used in learning of knowledge, skills, and social norms.

Transfer learning focuses on storing solution models of existing problems and using the solution models on other different but related problems. For example, knowledge (or a model) used to identify a car may also be used to improve a capability of identifying a truck. There is a specific conceptual relationship between transfer learning in the computer field and transfer learning that is often mentioned in psychology, but an academic relationship between the two fields is very limited. Deep learning enables a machine to autonomously obtain knowledge from data and apply the knowledge to resolve a new problem. Transfer learning focuses on transferring learned knowledge to resolve a new problem.

(11) Neural network pruning

In a process of network training, an evaluation mechanism is sought to remove an unimportant connection, node, and even convolution kernel, to simplify a network structure. Neural network pruning can be classified into two types. One is a constraint in training, a constraint item is added to a loss function to induce network sparsification, and retraining is not required. The other is pruning after training, to remove a relatively redundant and unimportant part in a network. According to pruning granularities, there is inter-layer pruning and feature pruning. The inter-layer pruning and the feature pruning reduce a network depth and width respectively. Intra-core pruning is at a fine granularity.

Through neural network pruning, training time is reduced. In addition, as a computing amount decreases, a speed of each iteration of a connection in a network is improved, and a neural network model can be more quickly converged to an optimal solution. In addition, a running speed can be high, and a quantity of convolutional layers and a quantity of convolution kernels at a convolutional layer in a network obtained through sparsification can be smaller. A simpler and lighter model means a more efficient and quick weight update. An advantage of neural network pruning also lies in a more feasible embedded deployment, that is, a pruned network provides a wider possibility of application on a mobile device and another embedded device.

(12) Model quantization

Model quantization is to compress an original network by reducing a quantity of bits required by a weight, and mainly includes two methods: low precision and recoding. For example, low precision means that a weight parameter is represented by a floating point number or an integer number with a smaller quantity of bits for training, testing, or storage. Recoding means that original data is recoded and the original data is represented by using a smaller quantity of bits, and a representative includes a binary weight/binary neural network. Model quantization is a process in which a floating-point model weight or tensor data flowing through the model with consecutive values (or a large quantity of possible discrete values) is approximated to a limited quantity of discrete values at a fixed point with a low inference precision loss, and is a process in which a data type with a smaller quantity of bits is used to approximately represent 32-bit floating-point data with a limited range. An input and output of the model are still of a floating-point type. Therefore, a model size is reduced, model memory consumption is reduced, a model inference speed is increased, and the like.

At present, many quantization technologies can achieve lossless compression for image classification. However, use of quantization in complex tasks such as segmentation tasks usually has great impact on model precision.

(13) Knowledge distillation

Knowledge distillation (knowledge distillation, KD), also referred to as network distillation, is a common method for model compression. Different from pruning and quantization during model compression, knowledge distillation builds a lightweight small model and uses supervision information of a large model with better performance to train the small model, to achieve better performance and precision. Specifically, the large model may be referred to as a teacher model, the small model is referred to as a student model, supervision information output from the teacher model is referred to as knowledge, and a process in which the student model performs transfer learning on the supervision information from the teacher model is referred to as knowledge distillation.

FIG. 6 is a diagram of an example system architecture 600 according to an embodiment of this application. As shown in FIG. 6, a data collection device 660 is configured to collect training data. For example, for a neural network model used for image classification, the training data may include a training image and a classification result corresponding to the training image, and the result of the training image may be a result of manual pre-labeling.

After the training data is collected, the data collection device 660 stores the training data in a database 630, and a training device 620 obtains a target model/rule 601 through training based on the training data in the database 630.

The following describes a process in which the training device 620 obtains the target model/rule 601 based on the training data. The training device 620 processes an input raw image, and compares an output image with the raw image until a difference between the image output by the training device 620 and the raw image is less than a specific preset threshold. In this way, the training process of the target model/rule 601 is completed.

In a possible implementation, the training device 620 may be configured to: obtain a pre-trained network model, migrate the pre-trained network model based on a target dataset, and search the migrated network model for a subnet model, to obtain the target model/rule 601. The target dataset may be stored in the database 630. The training device 620 may also be configured to pre-train a network model. The network model is obtained through training based on a source dataset, and the source dataset may also be stored in the database 630.

The target model/rule 601 in this embodiment of this application may be specifically a neural network model, for example, a convolutional neural network, a recurrent neural network, or a deep neural network. It should be noted that, in actual application, the training data maintained in the database 630 is not necessarily collected by the data collection device 660, but may be received from another device, for example, may be a target dataset input by a client device 640. In addition, it should be noted that the training device 620 may not train the target model/rule 601 completely based on the training data maintained in the database 630, but may obtain training data from a cloud or another place to perform model training. The foregoing description should not be used as a limitation on embodiments of this application.

The target model/rule 601 obtained by the training device 620 through training may be applied to different systems or devices, for example, applied to the execution device 610 shown in FIG. 6. The execution device 610 may be a terminal, for example, a mobile phone terminal, a tablet computer, a notebook computer, an augmented reality (augmented reality, AR) AR/virtual reality (virtual reality, VR) terminal, or a vehicle-mounted terminal; or may be a server, a cloud, or the like. As shown in FIG. 6, an input/output (input/output, I/O) interface 612 is configured for the execution device 610, and is configured to exchange data with an external device. A user may input data to the I/O interface 612 by using the client device 640. For example, the input data may include a to-be-processed image input by the client device.

Optionally, the execution device 610 may further include a preprocessing module 613. The preprocessing module 613 is configured to perform preprocessing based on the input data (for example, picture data) received by the I/O interface 612. If the input data does not need to be preprocessed, the input data (for example, directly collected picture data) received from the I/O interface 612 is directly input to the execution device 610 for processing.

In a process in which the execution device 610 preprocesses the input data or a computing module 611 of the execution device 610 performs related processing like computing, the execution device 610 may invoke data, code, and the like in a data storage system 650 for corresponding processing; and may store, in the data storage system 650, data, instructions, and the like that are obtained through the corresponding processing.

Then, the I/O interface 612 provides a processed result for the client device 640, for example, returns the obtained image classification result to the client equipment 640 for use by a client.

It should be understood that the training device 620 may generate, for different targets or different task requirements, corresponding target models/rules 601 based on different training data. The corresponding target models/rules 601 may be used to achieve the foregoing targets or complete the foregoing tasks, to provide a required processing result for a user.

In the case shown in FIG. 6, the user may manually give input data, and the manually given data may be operated on an interface provided by the I/O interface 612. In another possible implementation, the client device 640 may automatically send input data to the I/O interface 612. If the client device 640 needs to obtain authorization of the user before automatically sending the input data, the user may set corresponding permission in the client device 640. The user may view, on the client device 640, a result output by the execution device 610. A specific presentation form may be a specific manner such as display, sound, or action. The client device 640 may alternatively be used as a data collection end, to collect, as new sample data, input data input to the I/O interface 612 and an output result output from the I/O interface 612 that are shown in the figure, and store the new sample data in the database 630. Certainly, the client device 640 may alternatively not perform collection. Instead, the I/O interface 612 directly stores, in the database 630 as new sample data, the input data input to the I/O interface 612 and the output result output from the I/O interface 612 that are shown in FIG. 6.

It should be further understood that FIG. 6 is a diagram of a system architecture according to an embodiment of this application. This application does not constitute any limitation on a location relationship between devices, components, modules, and the like in the system architecture. For example, in the system architecture shown in FIG. 6, the data storage system 650 is an external memory relative to the execution device 610. In another possible case, the data storage system 650 may be disposed in the execution device 610.

As shown in FIG. 6, the target model/rule 601 may be obtained through training by the training device 620. The target model/rule 601 may be a neural network model in embodiments of this application. Specifically, the neural network model constructed in embodiments of this application may include a CNN, a deep neural network (deep neural networks, DNN) model, a deep convolutional neural network (deep convolutional neural networks, DCNN) model, a recurrent neural network (recurrent neural network, RNN) model, or the like. This is not limited in embodiments of this application.

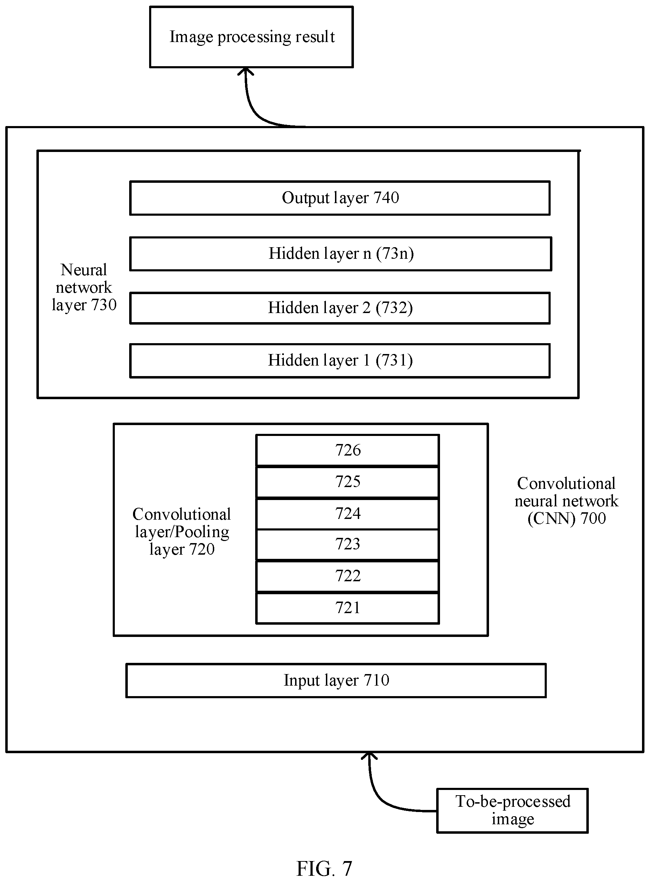

FIG. 7 is a diagram of a structure of a convolutional neural network model according to an embodiment of this application. As shown in FIG. 7, the convolutional neural network (CNN) model 700 may include an input layer 710, a convolutional layer/pooling layer 720 (where the pooling layer is optional), and a neural network model layer 730. For example, the input layer 710 may obtain a to-be-processed image, and send the obtained to-be-processed image to the convolutional layer/pooling layer 720 and the subsequent neural network model layer 730 for processing. The following describes in detail a layer structure in the CNN 700 in FIG. 7.

Convolutional layer/Pooling layer 720:

Convolutional layer:

As shown in FIG. 7, the convolutional layer/pooling layer 720 may include layers 721 to 726 shown as an example. For example, in a possible implementation, layer 721 is a convolutional layer, layer 722 is a pooling layer, layer 723 is a convolutional layer, layer 724 is a pooling layer, layer 725 is a convolutional layer, and layer 726 is a pooling layer. In another possible implementation, layers 721 and 722 are convolutional layers, layer 723 is a pooling layer, layers 724 and 725 are convolutional layers, and layer 726 is a pooling layer. That is, an output of a convolutional layer may be used as an input of a subsequent pooling layer, or may be used as an input of another convolutional layer to continue a convolution operation.

The following uses the convolutional layer 721 as an example to describe in detail an internal working principle of one convolutional layer with reference to an image processing manner.

The convolutional layer 721 may include a plurality of convolution operators. The convolution operator may also be referred to as a convolution kernel. In image processing, the convolution operator functions as a filter that extracts specific information from an input image matrix. The convolution operator may essentially be a weight matrix, and the weight matrix is usually predefined. In a process of performing a convolution operation on an image, the weight matrix is usually used for processing one pixel by one pixel (or two pixels by two pixels, which depends on a value of a stride (stride)) in a horizontal direction on an input image, to extract a specific feature from the image. A size of the weight matrix should be related to a size of the image. It should be noted that a depth dimension (depth dimension) of the weight matrix is the same as a depth dimension of the input image. In the process of performing the convolution operation, the weight matrix extends to an entire depth of the input image. Therefore, a convolutional output of a single depth dimension is generated through convolution with a single weight matrix. However, in most cases, a single weight matrix is not used, but a plurality of weight matrices with a same size (rows×columns), namely, a plurality of same-type matrices, are applied. Outputs of the weight matrices are stacked to form a depth dimension of a convolutional image. The dimension herein may be understood as being determined based on the foregoing "plurality". Different weight matrices may be used to extract different features from the image. For example, one weight matrix is used to extract edge information of the image, another weight matrix is used to extract a specific color of the image, and another weight matrix is used to extract noise information in the image. The plurality of weight matrices have the same size (rows×columns), and convolutional feature maps extracted by the plurality of weight matrices with the same size have a same size. Then, the plurality of extracted convolutional feature maps with the same size are combined to form an output of the convolution operation.

Weight values in these weight matrices need to be obtained through a lot of training during actual application. Each weight matrix including weight values obtained through training may be used to extract information from an input image, to enable the convolutional neural network model 700 to perform correct prediction.

When the convolutional neural network model 700 has a plurality of convolutional layers, an initial convolutional layer (for example, layer 721) usually extracts more general features, where the general features may also be referred to as low-level features. As a depth of the convolutional neural network model 700 increases, a deeper convolutional layer (for example, layer 726) extracts more complex features, such as high-level semantic features. The higher-level semantic features are more applicable to a problem to be resolved.

Pooling layer:

A quantity of training parameters often needs to be reduced. Therefore, a pooling layer usually needs to be periodically introduced after a convolutional layer. To be specific, for the layers 721 to 726 shown by 720 in FIG. 7, one convolutional layer may be followed by one pooling layer, or a plurality of convolutional layers may be followed by one or more pooling layers. During image processing, an objective of the pooling layer is to reduce a space size of an image. The pooling layer may include an average pooling operator and/or a maximum pooling operator, to perform sampling on the input image to obtain an image with a relatively small size. The average pooling operator may be used perform calculation on pixel values in the image in a specific range, to generate an average value, and the average value is used as an average pooling result. The maximum pooling operator may be used to select a pixel with a maximum value in a specific range as a maximum pooling result. In addition, similar to that the size of the weight matrix at the convolutional layer needs to be related to the size of the image, an operator at the pooling layer also needs to be related to the size of the image. A size of a processed image output from the pooling layer may be less than a size of an image input to the pooling layer. Each pixel in the image output from the pooling layer represents an average value or a maximum value of a corresponding sub-region of the image input to the pooling layer.

Neural network model layer 730:

After processing by the convolutional layer/pooling layer 720, the convolutional neural network model 700 is not sufficient to output required output information. As described above, at the convolutional layer/pooling layer 720, only a feature is extracted, and parameters brought by the input image are reduced. To generate final output information (required class information or other related information), the convolutional neural network model 700 needs to use the neural network model layer 730 to generate an output of one required class or outputs of a group of required classes. Therefore, the neural network model layer 730 may include a plurality of hidden layers (such as 731, 732, ..., and 73n shown in FIG. 7) and an output layer 740. Parameters included in the plurality of hidden layers may be obtained through pre-training based on related training data of a specific task type. For example, the task type may include image recognition, image classification, super-resolution image reconstruction, and the like.

At the neural network model layer 730, the plurality of hidden layers are followed by the output layer 740, that is, the last layer of the entire convolutional neural network model 700. The output layer 740 has a loss function similar to a categorical cross entropy, and the loss function is specifically used to calculate a prediction error. Once forward propagation (for example, propagation in a direction from 710 to 740 in FIG. 7 is forward propagation) of the entire convolutional neural network model 700 is completed, back propagation (for example, propagation in a direction from 740 to 710 in FIG. 7 is back propagation) is started to update a weight value and a deviation of each layer mentioned above, to reduce a loss of the convolutional neural network model 700 and an error between a result output by the convolutional neural network model 700 by using the output layer and a target result.

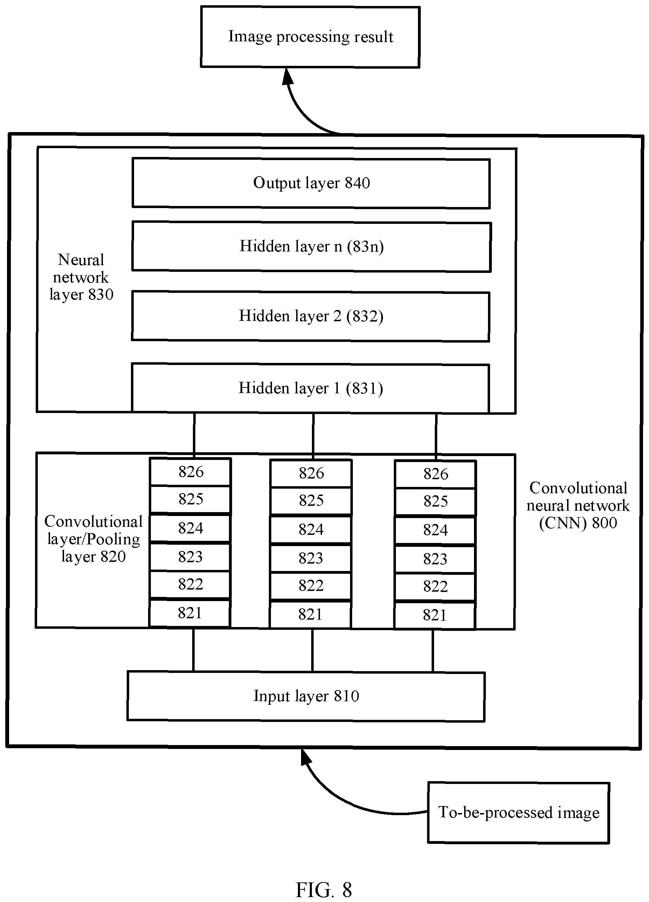

A diagram of a structure of a convolutional neural network model according to an embodiment of this application may be shown in FIG. 8. The convolutional neural network (CNN) model 800 shown in FIG. 8 may include an input layer 810, a convolutional layer/pooling layer 820 (where the pooling layer is optional), and a neural network model layer 830. Compared with FIG. 7, in FIG. 8, at the convolutional layer/pooling layer 820, a plurality of convolutional layers/pooling layers are in parallel, and separately extracted features are all input to the neural network model layer 230 for processing.

It should be understood that the convolutional neural network models shown in FIG. 7 and FIG. 8 are merely used as structural examples of a neural network model. In specific application, the convolutional neural network model may alternatively exist in a form of another network model. This is not limited in embodiments of this application.

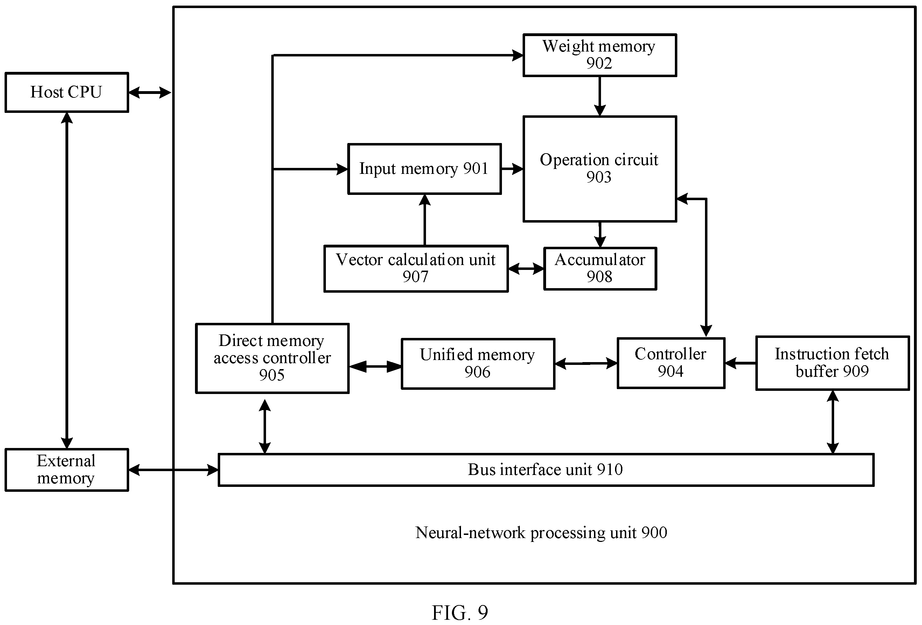

FIG. 9 shows a hardware structure of a chip according to an embodiment of this application. The chip includes a neural-network model processing unit 900. The chip may be disposed in the execution device 610 shown in FIG. 6, to complete computing work of the computing module 611. The chip may alternatively be disposed in the training device 620 shown in FIG. 6, to complete training work of the training device 620 and output the target model/rule 601. Algorithms at all layers in the convolutional neural network models shown in FIG. 7 and FIG. 8 may be implemented in the chip shown in FIG. 9.

The neural-network model processing unit NPU 50 is mounted to a host central processing unit (central processing unit, CPU) as a coprocessor, and the host CPU assigns a task. A core part of the NPU is an operation circuit 903, and a controller 904 controls the operation circuit 903 to extract data in a memory (a weight memory or an input memory) and perform an operation.

In an implementation, the operation circuit 903 includes a plurality of processing units (process engine, PE). The operation circuit 903 may be a two-dimensional systolic array. The operation circuit 903 may alternatively be a one-dimensional systolic array or another electronic circuit that can perform mathematical operations such as multiplication and addition. In a possible implementation, the operation circuit 903 is a general-purpose matrix processor.

For example, it is assumed that there is an input matrix A, a weight matrix B, and an output matrix C. The operation circuit obtains data corresponding to the matrix B from a weight memory 902, and buffers the data on each PE in the operation circuit. The operation circuit obtains the matrix A from an input memory 901, performs a matrix operation on the matrix A and the matrix B, to obtain a partial result or a final result of the matrix, and stores the result in an accumulator (accumulator) 908.

A vector calculation unit 907 may perform further processing on an output of the operation circuit, such as vector multiplication, vector addition, an exponential operation, a logarithmic operation, and size comparison. For example, the vector calculation unit 907 may be configured to perform network computing such as pooling (pooling), batch normalization (batch normalization), local response normalization (local response normalization), and the like at a non-convolutional layer/non-FC layer in the neural network model.

In some implementations, the vector calculation unit 907 can store a processed output vector in a unified memory 906. For example, the vector calculation unit 907 may apply a non-linear function to the output of the operation circuit 903, for example, to a vector of an accumulated value, so as to generate an activation value. In some implementations, the vector calculation unit 907 generates a normalized value, a combined value, or both. In a possible implementation, the processed output vector can be used as an activation input of the operation circuit 903, for example, used at a subsequent layer in the neural network model.

The unified memory 906 is configured to store input data and output data.

A direct memory access controller (direct memory access controller, DMAC) 905 is configured to transfer input data in an external memory to the input memory 901 and/or the unified memory 906, stores weight data in the external memory into the weight memory 902, and stores data in the unified memory 906 into the external memory.

Abus interface unit (bus interface unit, BIU) 910 is configured to implement interaction between the host CPU, the DMAC, and an instruction fetch buffer 909 through a bus.

The instruction fetch buffer (instruction fetch buffer) 909 connected to the controller 904 is configured to store instructions used by the controller 904.

The controller 904 is configured to invoke the instructions buffered in the instruction fetch buffer 909, to control a working process of the operation accelerator.

Generally, the unified memory 906, the input memory 901, the weight memory 902, and the instruction fetch buffer 909 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

The training device 610 in FIG. 6 described above can perform steps of a neural network model obtaining method in embodiments of this application. The chip shown in FIG. 9 may also be configured to perform the steps of obtaining a neural network model in embodiments of this application.

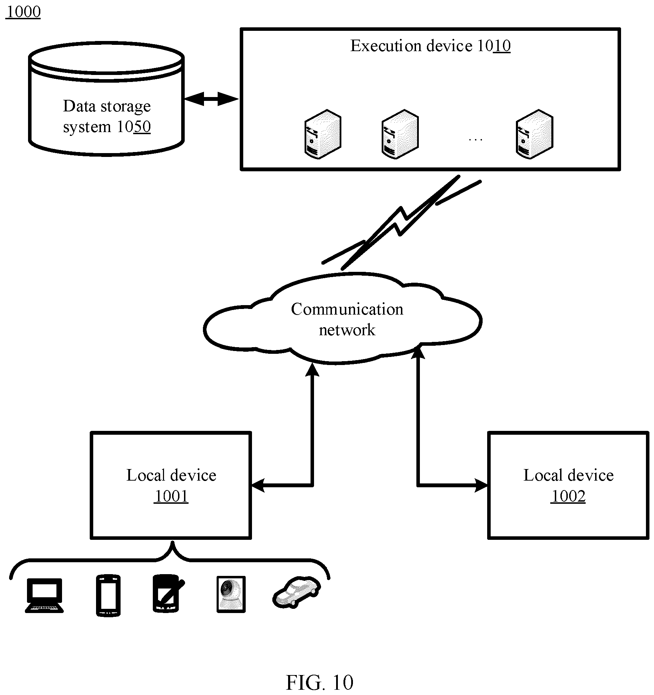

FIG. 10 shows a system architecture 1000 according to an embodiment of this application. The system architecture includes a local device 1001, a local device 1002, an execution device 1010, and a data storage system 1050. The local device 1001 and the local device 1002 are connected to the execution device 1010 through a communication network.

The execution device 1010 may be implemented by one or more servers. Optionally, the execution device 1010 may cooperate with another computing device, for example, a device such as a data memory, a router, or a load balancer. The execution device 1010 may be disposed on one physical site, or distributed on a plurality of physical sites. The execution device 1010 may implement the neural network model obtaining method or the neural network model training method in embodiments of this application by using data in the data storage system 1050 or by invoking program code in the data storage system 1050.

Through the foregoing process, the execution device 1010 can obtain a target neural network model. The target neural network model may be used for image classification, image processing, or the like.

A user may operate user equipment (for example, the local device 1001 and the local device 1002) of the user to interact with the execution device 1010. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the execution device 1010 through a communication network of any communication mechanism/communication standard. The communication network may be a wide area network, a local area network, a point-to-point connection, or any combination thereof.

In an implementation, the local device 1001 and the local device 1002 obtain a related parameter of the target neural network model from the execution device 1010, deploy the target neural network model on the local device 1001 and the local device 1002, and perform image classification, image processing, or the like by using the target neural network model.

In another implementation, the target neural network model may be directly deployed on the execution device 1010. The execution device 1010 obtains a to-be-processed image from the local device 1001 and the local device 1002, and performs classification or another type of image processing on the to-be-processed image by using the target neural network model.

Alternatively, the execution device 1010 may be a cloud device. In this case, the execution device 1010 may be deployed on a cloud. Alternatively, the execution device 1010 may be a terminal device. In this case, the execution device 1010 may be deployed on a user terminal side. This is not limited in embodiments of this application.

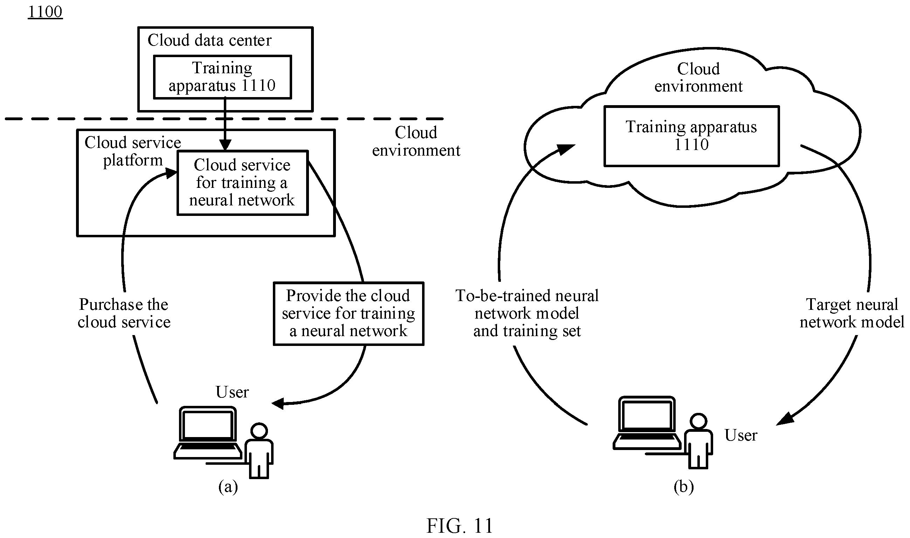

FIG. 11 is a diagram of apparatus deployment for model training according to an embodiment of this application. As shown in (a) in FIG. 11, a training apparatus 1110 may be deployed in a cloud environment. The cloud environment refers to an entity that provides a cloud service for a user by using a basic resource in a cloud computing mode. The cloud environment includes a cloud data center and a cloud service platform. The cloud data center includes a large quantity of basic resources (including computing resources, storage resources, and network resources) owned by a cloud service provider. The computing resources included in the cloud data center may be a large quantity of computing devices (for example, servers).

The training apparatus 1110 may be a server that trains a neural network model in cloud data, or may be a virtual machine that trains a neural network model.

The training apparatus 1110 may alternatively be a software apparatus deployed on the server or the virtual machine in the cloud data center. The software apparatus is configured to train the neural network model. The software apparatus may be deployed on a plurality of servers in a distributed manner, or deployed on a plurality of virtual machines in a distributed manner, or deployed on the virtual machine and the server in a distributed manner.

As shown in FIG. 11, the training apparatus 1110 may be abstracted by the cloud service provider on the cloud service platform into a cloud service for training a neural network model, and the cloud service is provided for the user. After the user purchases the cloud service on the cloud service platform, the cloud environment provides the cloud service for training a neural network for the user by using the cloud service.

For example, as shown in (b) in FIG. 11, the user may upload a to-be-trained neural network model (or may upload an original training set) to the cloud environment by using an application programming interface (application program interface, API) or by using a web page interface provided by the cloud service platform. The training apparatus 1110 receives the to-be-trained neural network model and the training set, and the training apparatus 1110 trains the to-be-trained neural network model. Finally, a target neural network obtained through training is returned by the training apparatus 1110 to an edge device of the user.

The edge device is any device that has computing resources and network resources between a data generation source and a cloud center. For example, a mobile phone is an edge device between a person and the cloud center, and a gateway is an edge device between a smart household and the cloud center. In an ideal environment, the edge device is a device that analyzes or processes data in the vicinity of the data generation source. Because no data is transferred, network traffic and response time are reduced.

The edge device in embodiments of this application may be a mobile phone having a computing capability, a tablet personal computer (tablet personal computer, TPC), a media player, a smart household, a laptop computer (laptop computer, LC), a personal digital assistant (personal digital assistant, PDA), a personal computer (personal computer, PC), a camera, a video camera, a smartwatch, a wearable device (wearable device, WD), an autonomous driving vehicle, or the like. It should be understood that a specific form of the edge device is not limited in embodiments of this application.

For example, the user may upload a type of a target task to the cloud environment by using the application programming interface or the web page interface provided by the cloud service platform. Further, the user may upload the training set, and the training apparatus receives the type of the target task and the training set. The training apparatus 1110 trains a neural network model (for example, a to-be-trained image recognition model) corresponding to the type of the target task, and the training apparatus 1110 returns a target neural network model (for example, a target image recognition model) finally obtained through training to the edge device of the user.

The training apparatus 1110 may be deployed in the cloud environment as shown in (a) in FIG. 11. Alternatively, the training apparatus 1110 may be a terminal device. In this case, the execution device 1110 may be deployed on a user terminal side. This is not limited in embodiments of this application.

Currently, in a common transmission solution for a neural network model, the neural network model is considered as a source for processing, and data of a neural network that meets a channel bandwidth requirement is obtained through processes such as source encoding and channel encoding. Subsequently, the data is sent to a receiver device through a wireless channel. After receiving the data, the receiver device performs processes such as channel decoding and source decoding, to complete transmission of the neural network model. In the foregoing model transmission solution, some AI technologies, such as network pruning, network parameter quantization, and knowledge distillation, may be used to obtain a neural network model with a relatively small size, so that storage space of the receiver can be saved and an inference latency of the receiver can be reduced without significantly affecting inference accuracy. However, in the foregoing transmission solution, a conventional communication system is still used as a transmission channel of the neural network model, that is, a transmitter network and a receiver network need to be the same. Essentially, this still belongs to a conventional end-to-end communication system, a plurality of neural network models are transmitted independently of each other, and a communication process does not participate in training and inference of an AI application. Consequently, transmission performance of the neural network model is relatively low, and it is difficult to meet a current requirement of multi-neural network model transmission.

Therefore, for a high-performance transmission requirement of a plurality of neural network models in a future communication scenario, this application provides a method for joint transmission of neural network models. A neural network is combined with a conventional communication system, and a plurality of neural network models on different transmitters are combined through a channel based on a task requirement to generate a new neural network model, to implement a transmission requirement of a receiver device for the plurality of neural network models. This helps control diversity and effectiveness of an AI application, avoid training transmission of a plurality of single neural networks, reduce resource overheads and a latency of the plurality of neural network models with respect to a plurality of modalities and a plurality of task requirements, and save storage space of receiver and transmitter devices for the neural network models to some extent.

In embodiments of this application, the neural network model refers to a program and data that are obtained by using a large amount of labeled training data and that are used to perform cognitive computing. The neural network model includes a neural network architecture component and a neural network parameter component. The neural network architecture component refers to a network and a hierarchical structure of the network that are in the neural network model and that are related to a neural network algorithm, that is, the program used to perform cognitive computing in the neural network model. The neural network parameter component refers to a large quantity of parameters obtained when the neural network model is trained, and is used as a value of a neuron in a neural network architecture, that is, the data used to perform cognitive computing in the neural network model.

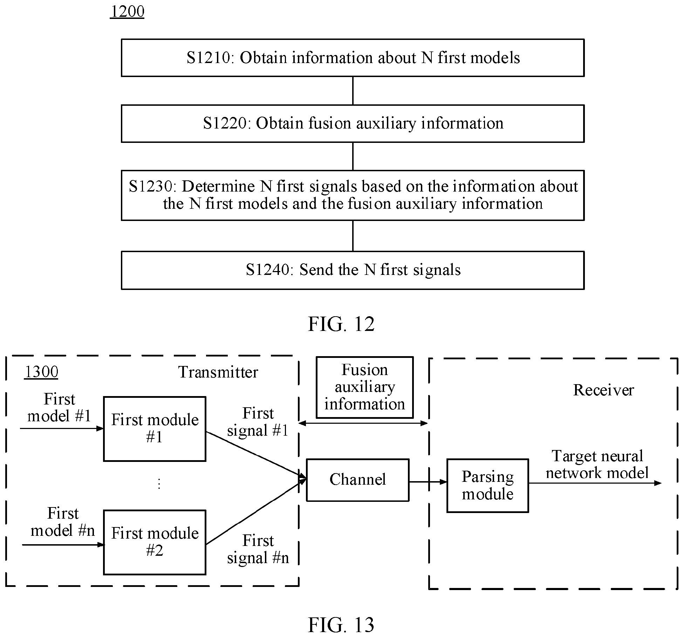

The model transmission method in embodiments of this application is described below in detail with reference to FIG. 12. A transmitter device and a terminal device in the method shown in FIG. 12 each may be implemented by a network device or a terminal device. This is not limited in embodiments of this application. For example, when the transmitter device is a network device, the receiver device may be a terminal device or a network device. The method 1200 includes step S1210 to step S1240. The following describes steps S1210 to S1240 in detail.

It should be understood that, in embodiments of this application, a system applicable to the method shown in FIG. 12 may include at least one transmitter device and one receiver device. For example, the method in this embodiment of this application may be used in a scenario in which a plurality of neural network models in one transmitter are jointly transmitted, or in a scenario in which at least one neural network model in a plurality of different transmitters is jointly transmitted.

It should be understood that, in embodiments of this application, the receiver device may also be referred to as a receiver apparatus, and the transmitter device may also be referred to as a transmitter apparatus. This is not limited in this application.

The following uses a scenario of joint transmission of a plurality of neural network models in one transmitter device as an example to describe in detail the model transmission method in this application.

S1210: A transmitter device obtains information about N first models.

The N first models may correspond to N first tasks, and N is an integer greater than or equal to 2.

It should be understood that, in this embodiment of this application, the N first models may be determined based on task requirement information. For example, when a receiver edge device needs to perform a service of image classification, the transmitter device may determine, by receiving the task requirement information, a plurality of transmitter neural network models that meet a requirement of the service. Alternatively, the transmitter neural network models that meet the requirement of the service may be determined by the cloud device or the cloud service platform in FIG. 11 based on service requirement information. This is not limited in embodiments of this application. The foregoing cloud device may be understood as a server that provides a service for the transmitter device.

It should be further understood that the N first models may be understood as pre-trained neural network models. For example, when a task requirement is image classification, a transmitter may obtain, through training based on a source dataset (for example, an Image net dataset), a neural network model that meets a service requirement for use by the transmitter. It should be understood that the pre-trained neural network model may be completed in an offline phase, or may be completed online. For example, if the pre-trained neural network model is completed in the offline phase, when obtaining the neural network model based on the task requirement information, the transmitter device may directly obtain the trained neural network model without performing a pre-training operation online.

It should be further understood that the N first models are any neural network models that meet the task requirement. This is not limited in embodiments of this application.

It should be further understood that the task requirement information may include an external feature value of a target neural network model. The external feature value of the neural network model may be understood as a value that does not change in a process of training the neural network model. Alternatively, the external feature value may be an external feature value that has been manually determined or determined based on experience before training of the neural network model.

The external feature value of the target neural network model includes one or more of the following information: neural network computation graph information, optimizer information, and hyperparameter information.

It should be further understood that the neural network computation graph information may indicate a structure of a neural network. The structure of the neural network includes one or more of the following: a type of the neural network, a quantity of layers of the neural network, a quantity of nodes at each layer of the neural network, and a node connection manner of the neural network.

The type of the neural network in this embodiment of this application may be a fully connected neural network, a convolutional neural network, a deep neural network, a recurrent neural network, or the like. This is not limited in this embodiment of this application.

Hyperparameters in the neural network may include three types: a network parameter, an optimization parameter, and a regularization parameter. The network parameter refers to an interaction manner (for example, addition, multiplication, or concatenation) between network layers, a quantity of convolution kernels, a size of a convolution kernel, a quantity of network layers (or referred to as a depth), an activation function, and the like. The optimization parameter refers to a learning rate (learning rate), a batch size (batch size), parameters (for example, momentum parameters (momentums)) of different optimizers, and an adjustable parameter of a partial loss function. The regularization parameter refers to a weight attenuation coefficient, a dropout (dropout) parameter of a neural network model, and the like.

It should be understood that the hyperparameter of the neural network model includes a parameter that is unchanged in a training process of the neural network model, that is, the hyperparameter is not obtained by training the neural network model, and is usually determined before training of the neural network model. In this embodiment of this application, the hyperparameter information may be manually set based on experience or a task requirement. This is not limited in this embodiment of this application.

In an implementation, the N first models may correspond to N signals A.

It should be understood that the N signals A are used to carry the information about the corresponding first models.

In an implementation, the transmitter edge device may encode the information about the N first models by using an encoder of the transmitter edge device, and generate the N signals A.

In a possible implementation, the transmitter device sequentially performs source encoding, channel encoding, modulation, and up-conversion or down-conversion on the information about the N first models to obtain the N corresponding signals A.

In this embodiment of this application, information about a model may include an external feature value of the neural network model and/or a parameter of the neural network model. The information about the model in this application is not limited to information about the first model or a target model, and any neural network model in this application may include such information. Specifically, the external feature value of the neural network model includes one or more of the following information: neural network computation graph information, optimizer information, and hyperparameter information; and the parameter of the neural network model includes one or more of the following: a weight matrix, a weight vector, a bias matrix, a bias vector, and an activation function.

In this embodiment of this application, the N signals A corresponding to the N first models may be analog signals or digital signals. This is not limited in this embodiment of this application.

It should be understood that the N signals A are in a one-to-one correspondence with the N first models, and N is an integer greater than or equal to 2.

S 1220: The transmitter device obtains fusion auxiliary information.

Specifically, the fusion auxiliary information includes an external feature value of a target model.

In this embodiment of this application, the external feature value of the target model includes one or more of the following information: neural network computation graph information of the target model, optimizer information of the target model, and hyperparameter information of the target model.

In an implementation, the target model may correspond to a second task, and the second task may be the same as or different from the N first tasks corresponding to the N first models. This is not limited in this embodiment of this application. For example, in the transmitter, a 1st first model may be used to detect a tree in an image, and a 2nd first model may be used to detect a bird in the image. The target model obtained by using the joint model transmission method provided in this application may be used to classify flowers in the image.

S 1230: Determine N first signals based on the information about the N first models and the fusion auxiliary information.

Specifically, the N first signals are obtained by N first modules by processing the information about the N first models and the fusion auxiliary information.

It should be understood that, in this embodiment of this application, the first model may be a module that implements a specific function, or a neural network model that meets a task requirement. This is not limited in this embodiment of this application.

In this embodiment of this application, the N first modules are trained neural network models obtained through training based on training data, and the N first modules may be in a one-to-one correspondence with the N first models.

In an implementation, the N first modules may be understood as N neural network models, and the neural network models are in a one-to-one correspondence with the N first models.

It should be understood that, the N first modules being in a one-to-one correspondence with the N first models may be understood as that N service requirements corresponding to the N first modules are in a one-to-one correspondence with N service requirements corresponding to the N first models, and a first model and a first module that are in a one-to-one correspondence with each other correspond to a same service requirement. For example, the service requirements corresponding to the N first modules and the N first models may all be image classification services.

A type of the training data is related to a task requirement of the neural network model. For example, when the neural network model is used for an image processing task (for example, image classification, image detection, image segmentation, or image generation), the training data may be an image. When the neural network model is used for a text processing task (for example, text recognition or text translation), the training data may be a text. When the neural network model is used for a speech processing task (for example, speech recognition), the training data may be speech data. By way of example, and not limitation, this is not limited in this embodiment of this application.

In an implementation, the training data includes M first training signals and data of the target model, and the data of the target model may be understood as the external feature value of the target model, that is, the neural network computation graph information, the optimizer information, and the hyperparameter information of the target model. The M first training signals are in a one-to-one correspondence with M training models, and the M training models correspond to M service requirements.

It should be further understood that N services corresponding to the N first models include M services corresponding to the M first training models.

In an implementation, the transmitter device may determine, based on information about at least one first model other than an $i^{th}$ first model in the N first models, a first module corresponding to the $i^{th}$ first model. The information about the at least one first model refers to a parameter and an external feature value of the neural network model. The parameter of the neural network model is an internal feature parameter of the neural network model, that is, a parameter that can be adjusted and changed in a model training process.

The parameter of the model refers to one or more of the following: a weight matrix, a weight vector, a bias matrix, a bias vector, and an activation function.

For example, when services corresponding to two first models each are a target detection service in an image processing service, if a $1^{st}$ first model may be used to detect a tree in an image, and a $2^{nd}$ first model may be used to detect a bird in the image, the $1^{st}$ first model may obtain, based on a parameter (for example, a weight matrix or a weight vector) in the $2^{nd}$ first model, a $1^{st}$ first module corresponding to the $1^{st}$ first model. A service of the $1^{st}$ first module is corresponding to the service of the $1^{st}$ first model, and the $1^{st}$ first module may be used to detect a bird and a tree in the image at the same time.

The following describes in detail a training process of the N first modules.

The transmitter device may obtain M original models, where the M original models are in a one-to-one correspondence with the M first training signals, and M is an integer greater than or equal to 2. The transmitter sequentially inputs the M first training signals into the M original models that are in a one-to-one correspondence with the M first training signals, to obtain M second training signals, where the M second training signals are in a one-to-one correspondence with the M first training signals.

Then, the transmitter superimposes the M second training signals on a same channel to obtain a third training signal. A receiver device parses the third training signal to obtain an intermediate model. It should be understood that the receiver device may decode the third training signal to obtain the intermediate model corresponding to the third training signal. The transmitter device adjusts parameters of the M original models based on a deviation between the intermediate model and the target model, to obtain a trained model library.

It should be understood that the trained model library includes an adjusted original model, and a deviation between an adjusted intermediate model and the target model is within a preset range. Alternatively, it may be understood that an output value of the intermediate model is compared with a target value of the target model, until a difference between the output value of the intermediate model and the target value is less than a preset threshold. To be specific, when a value of a loss function reaches a preset threshold, training of the intermediate model is stopped.

Finally, the transmitter device may obtain the N first modules from the model library obtained through training. Specifically, the transmitter device may search, based on a task requirement, the trained model library for a neural network model that meets the current task requirement as a first module.

In a possible implementation, the original model may be determined based on the task requirement information, that is, the original model may be obtained through training based on a source dataset (for example, a dataset such as ImageNet or Labelme) that meets the task requirement information.

It should be understood that a condition for stopping the foregoing training may be flexibly set based on an actual application requirement and an application scenario. For example, the condition for stopping the training may include but is not limited to: Training time reaches preset duration, a quantity of training times reaches a preset quantity of times, a value of a loss function or an attenuation amplitude reaches a preset threshold, or the like.

In a possible implementation, after the N first models are processed, the N signals A that are in a one-to-one correspondence with the N first models may be obtained. The N signals A may be processed by the foregoing N trained first modules to obtain the N first signals. The N first signals are superimposed on a same channel to obtain a second signal corresponding to the target model.

It should be understood that the trained neural network model may execute a target task. For example, the target task may be an image processing task, including target detection, image segmentation, instance segmentation, image denoising, image super-resolution, or the like. Alternatively, the target task may be a speech processing task, for example, speech recognition. Alternatively, the target task may be a text processing task, for example, text recognition or text translation.

It should be understood that, in this embodiment of this application, the training process of the N first modules may be performed by a neural network model training apparatus. The training apparatus may be implemented by a cloud device; or may be implemented by a terminal device, for example, an apparatus such as an edge device, a computer, or a server that has an operation capability sufficient to perform a neural network model training method; or may be implemented by a system including a cloud device and a terminal device. Specifically, the training process of the model may be performed by the training device 620 in FIG. 6, the neural-network processing unit 900 in FIG. 9, the execution device 1010 or the local device 1001 or 1002 in FIG. 10, or the training apparatus 1110 in FIG. 11. This is not limited in this embodiment of this application.

It should be further understood that the training process of the N first modules may be completed in an offline phase, or may be completed online. For example, if the N first modules are completed in the offline phase, the transmitter device may directly obtain the trained neural network model without performing a pre-training operation online.

In an implementation, the transmitter device processes the N signals A based on the N first modules to obtain the N first signals.

Specifically, the transmitter device may obtain the N first signals by processing the N signals A corresponding to the N first models.

In a possible implementation, the transmitter device may obtain the N signals A by processing the N first models, and obtain the N first signals by processing the N signals A based on the N obtained first modules.

The N signals A are in a one-to-one correspondence with the N first models, and the N first modules are in a one-to-one correspondence with the N first models. It should be understood that, the N first modules being in a one-to-one correspondence with the N first models may be understood as that services of the N first models are in a one-to-one correspondence with services of the N first modules. The N first modules are obtained through training based on the training data, the training data includes the M first training signals and the target model, the M first training signals correspond to the M training models, each first training signal is a signal of a corresponding training model, the target model can meet a service requirement corresponding to the M training models, and the M services corresponding to the M first training models include the N services corresponding to the N first models.

Then, an $n^{th}$ first signal in the N first signals is a signal obtained by processing an $n^{th}$ signal A based on an $n^{th}$ first module, the $n^{th}$ signal A is a signal of a first model corresponding to the $n^{th}$ first module, the N signals A are in a one-to-one correspondence with the N first models, a first model and a first module corresponding to each other are corresponding to a same service, $n \in [1, N]$, N is an integer greater than or equal to 2, and M is an integer greater than or equal to 2.

For example, when N=5, a $1^{st}$ first signal in five first signals generated by the transmitter is a signal obtained by processing a $1^{st}$ signal A based on a $1^{st}$ first module, where the $1^{st}$ signal A corresponds to the $1^{st}$ first model, and the $1^{st}$ first model and the $1^{st}$ first module correspond to a same service.

It should be understood that the N first signals may be superimposed into the second signal on the channel, and the second signal corresponds to the target model.

It should be further understood that the second signal may be decoded by the receiver device to obtain data of the target model required by a task, and further obtain the target neural network model.

In a possible implementation, the transmitter device may further determine the N first modules based on a parameter of a channel for sending the N first signals, where the N first modules are in a one-to-one correspondence with the N first signals.

The parameter of the channel includes one or more of the following: channel state information CSI, a signal-to-noise ratio SNR, and link quality. The channel state information may include a channel quality indicator CQI, a rank indicator RI, and a precoding matrix PMI.

For example, the transmitter device may obtain configuration information of a neural network model based on the channel state information and the signal-to-noise ratio in the channel parameter, and further determine the N first modules that are in a one-to-one correspondence with the N first models.

In an implementation, the transmitter device may send reference information to the receiver device. The reference information is information provided by the transmitter for the receiver device to perform channel estimation or channel sounding. For example, the transmitter device may measure channel information in real time by sending the reference information. Then, the receiver device determines a configuration parameter of a neural network model of the transmitter device based on an obtained channel parameter, to obtain the N first modules. The configuration parameter of the neural network model includes an external feature value of the neural network model and/or a parameter of the neural network model. The external feature value of the neural network model includes one or more of the following information: neural network computation graph information, optimizer information, and hyperparameter information; and the parameter of the neural network model includes one or more of the following: a weight matrix, a weight vector, a bias matrix, a bias vector, and an activation function.

S1240: Send the N first signals.

In a possible implementation, the transmitter device sends the N generated first signals to the receiver device, where the second signal may be generated by superimposing the N first signals. After receiving and decoding the second signal, the receiver device may obtain the data of the target model that meets the task requirement, and further obtain the target neural network model, where the target model corresponds to the second signal.

In this embodiment of this application, the model transmission method 1200 may be alternatively represented by using a flowchart of model transmission shown in FIG. 13. It should be understood that steps related to the transmitter have been described in detail in FIG. 12, and details are not described herein again.

As shown in FIG. 13, the N first signals obtained by the transmitter device may be superimposed on a channel to obtain the second signal, where the second signal corresponds to the target model.

In an implementation, after receiving the second signal, the receiver device may obtain information about the target model by processing the second signal by using a parsing module, and finally obtain the target neural network model that meets the task requirement. A parsing method corresponding to the parsing module is related to the external feature value of the model.

In embodiments of this application, a method for joint transmission of neural network models in a plurality of transmitter devices is similar to the foregoing method. For brevity, details are not described herein again.

According to the foregoing joint model transmission method, joint transmission of a plurality of different neural network models can be implemented, resource overheads and a latency of the plurality of neural network models in a transmission process can be reduced, and storage space of the receiver device for the neural network models can be saved to some extent.

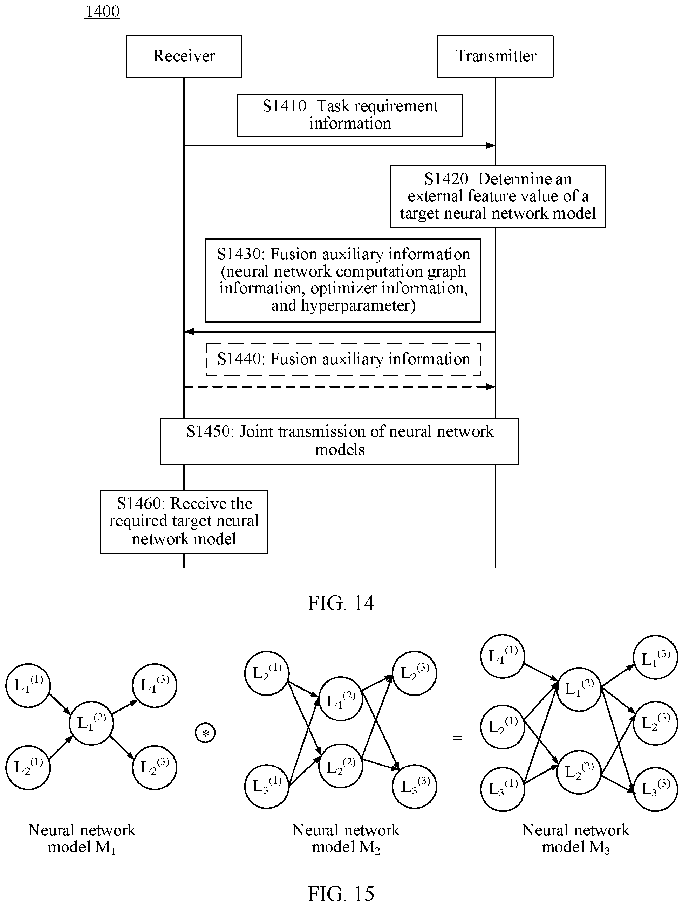

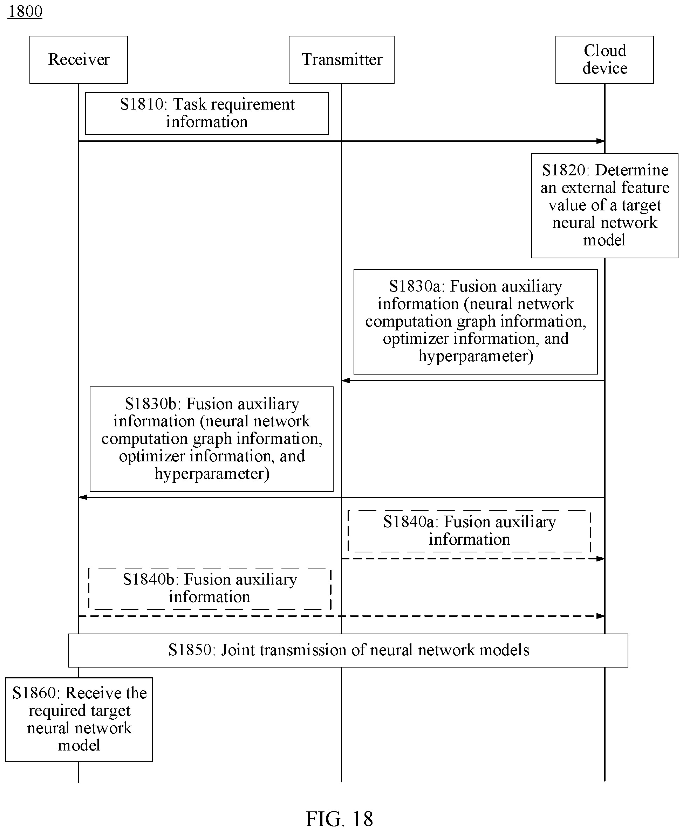

With reference to FIG. 14 and FIG. 18, the following describes in detail a method for joint transmission of neural network models according to an embodiment of this application.

FIG. 14 is a schematic flowchart of an example model transmission method according to an embodiment of this application. The method includes step S1410 to step S1460. The following describes steps S1410 to S1460 in detail.

It should be understood that in an application scenario of model transmission provided in this application, there may be one or more transmitter devices. For example, a plurality of neural networks in one transmitter device perform joint transmission of models to one receiver device, or three transmitter devices perform joint transmission of models to one receiver device.

S1410: A receiver sends task requirement information to a transmitter.

Correspondingly, the transmitter obtains the task requirement information sent by the receiver.

In a possible implementation, a receiver device may send the task requirement information to a transmitter device, and the transmitter device selects, based on the received task information from a receiver neural network model library obtained through offline training, one or more groups of neural network models that meet a task requirement as transmitter neural network models. It should be understood that the one or more groups of neural network models determined herein may be understood as the N first models in the foregoing method 1200.

In a possible implementation, the task requirement information may further include accuracy of the task requirement and performance of the receiver device.

It should be understood that the task requirement information may further include a decoding method for a target neural network model corresponding to the task requirement information. The decoding method for the target neural network model is related to a structure of the target neural network model that can be expressed by a receiver knowledge base. A neural network obtained through decoding by the receiver should be a neural network model that can be expressed in the knowledge base.

S 1420: The transmitter determines an external feature value of the target neural network model based on the task requirement information.

Specifically, after receiving the task requirement information sent by the receiver, the transmitter may select a plurality of neural network models that meet the task requirement as transmitter neural network models. A combination solution of the transmitter neural network models may be one or more combinations of transmitter neural network models in an implementation obtained in the foregoing channel communication operation manner.

The external feature value of the target neural network model includes one or more of the following information: neural network computation graph information, optimizer information, and hyperparameter information.

It should be understood that the external feature value of the neural network model in this embodiment of this application may be understood as a feature value that does not change due to training in a process of training the neural network model, and the external feature value may alternatively be a feature value that has been determined before training of the neural network model.

It should be further understood that the neural network computation graph information may indicate a structure of a neural network. The structure of the neural network includes one or more of the following: a type of the neural network, a quantity of layers of the neural network, a quantity of nodes at each layer of the neural network, and a node connection manner of the neural network.

By way of example, and not limitation, the type of the neural network in this embodiment of this application may be a fully connected neural network, a convolutional neural network, a deep neural network, a recurrent neural network, or the like. This is not limited in this embodiment of this application.

Hyperparameters in the neural network may include three types: a network parameter, an optimization parameter, and a regularization parameter. The network parameter refers to an interaction manner (for example, addition, multiplication, or concatenation) between network layers, a quantity of convolution kernels, a size of a convolution kernel, a quantity of network layers (or referred to as a depth), an activation function, and the like. The optimization parameter refers to a learning rate (learning rate), a batch size (batch size), parameters (for example, momentum parameters (momentums)) of different optimizers, and an adjustable parameter of a partial loss function. The regularization parameter refers to a weight attenuation coefficient, a dropout (dropout) parameter of a neural network model, and the like.

It should be understood that the hyperparameter of the neural network model includes a parameter that is unchanged in a training process of the neural network model, that is, the hyperparameter is not obtained by training the neural network model, and is usually determined before training of the neural network model. In this embodiment of this application, the hyperparameter information may be manually set based on experience or a task requirement. This is not limited in this embodiment of this application.

S 1430: The transmitter device sends fusion auxiliary information to the receiver device.

Correspondingly, the receiver device receives the fusion auxiliary information sent by the transmitter.

The fusion auxiliary information indicates the external feature value of the target neural network model that meets the task requirement.

In an implementation, after receiving first information, the receiver device reserves storage space for the target neural network model based on the external feature value (including one or more of the following information: neural network computation graph information, optimizer information, and hyperparameter information) of the target neural network model in the fusion auxiliary information.

In this embodiment of this application, the transmitter device and the receiver device may synchronize information about the external feature value of the target neural network model between the transmitter device and the receiver device by maintaining information about external feature values of a plurality of target neural network models. Specifically, a list of external feature values of target neural network models in the knowledge base may be identified and distinguished by using identification information.

For example, the list of the external feature values of the target neural network models in the synchronization knowledge base may be shown by the following table.

**Table 1**

| Network model structure | Network model ID |
|---|---|
| Conv 3x3 | 0001 |
| Conv 1×1 | 0002 |
| FC 16x16 | 0003 |

**Table 2**

| Network model optimizer | Network model optimizer ID |
|---|---|
| Adam | 1001 |
| RMSProp | 1002 |

**Table 3**

| Network model hyperparameter | Network model hyperparameter ID |
|---|---|
| Learning rate 0.01, moment 0.9 | 2001 |
| Learning rate 0.001, moment 0.9 | 2002 |

In Table 1 to Table 3, a first column indicates an external feature value of a neural network model, and a second column indicates ID information corresponding to the external feature value of the neural network model. The transmitter device and the receiver device may synchronize the information about the target neural network model between the transmitter and the receiver by using the first information, that is, an ID combination in the foregoing list. For example, when the ID combination corresponding to the first information received by the receiver device is 0001, 1002, and 2001, it may be learned, according to the correspondence list in the knowledge base, that the information about the external feature value of the target neural network model received by the receiver is: A structure of the target network model includes a convolutional layer whose convolution kernel size is 3*3, a selected network model optimizer is a root mean square propagation (root mean square prop, RMSProp) optimization algorithm, and hyperparameters of the network model are that a learning rate is 0.01 and a value of a momentum hyperparameter is 0.9.

It should be further understood that the network model optimizer in Table 2 is related to a hardware capability of the receiver device. For example, in some cases, because computing power of a terminal device is limited, only a relatively simple network model structure or optimizer can be run.

In a possible implementation, the fusion auxiliary information further includes reference information, and the reference information is used by the receiver to perform channel estimation or channel sounding, to obtain a channel parameter. Specifically, the transmitter may measure channel information in real time by sending the reference information, and then the receiver determines a configuration parameter of the transmitter neural network model based on the obtained channel parameter, to obtain a trained transmitter neural network model.

The configuration parameter of the neural network model includes an external feature value of the neural network model and/or a parameter of the neural network model. The external feature value of the neural network model includes one or more of the following: neural network computation graph information, optimizer information, and hyperparameter information; and the parameter of the neural network model includes one or more of the following: a weight matrix, a weight vector, a bias matrix, a bias vector, and an activation function.

In a possible implementation, step S1410 to step S1430 may be performed by a cloud device that provides a service for the transmitter device.

Optionally, S1440: The receiver device sends fusion auxiliary information to the transmitter device.

Correspondingly, the transmitter device receives the fusion auxiliary information sent by the receiver device, so that the receiver and the transmitter synchronize the external feature value of the target neural network model.

S1450: The transmitter performs joint transmission of neural network models.

Specifically, this step may be performed in the manner of the foregoing method 1200, and details are not described herein for brevity.

An embodiment of this application provides a channel communication operation manner, which may be represented as $\circledast$. A neural network model obtained by performing channel superimposition for a neural network model $E_i(M_i)$ generated after a network model obtained by the transmitter device is processed by an encoding module $E_i$ and a first module is:

$$\circledast_{i=1}^{N} \left[ h_i E_i(M_i) \right] + \mathrm{n} \qquad (3)$$

$h_i$ represents a channel that an $i^{\text{th}}$ transmitter neural network model passes through, n represents a noise interference signal, and a symbol "

$$\circledast_{i=1}^{N} \; []\text{'}$$

" in the foregoing formula (3) represents a superimposition operation process of the neural network model.

For example, when N=3, that is, the transmitter device has three neural network models: $M_1$, $M_2$, and $M_3$, signals corresponding to neural network models generated by transmitter encoding modules $E_1$, $E_2$, and $E_3$ are respectively $E_1(M_1)$, $E_2(M_2)$, and $E_3(M_3)$, and network models processed by trained neural network models $m_1$, $m_2$, and $m_3$ that are in a one-to-one correspondence with the signals may be represented as $E_1(m_1)$, $E_2(m_2)$, and $E_3(m_3)$. In this case, a superimposed neural network model generated through a channel may be represented as:

$$h_1 E_1(m_1) \circledast h_2 E_2(m_2) \circledast h_3 E_3(m_3) + n \qquad (4)$$

Then, a neural network model generated after the neural network model transmitted by the transmitter device through the channel is processed by a receiver decoding module D may be represented as:

$$\mathrm{M_r} = \mathrm{D}(\circledast_{i=1}^{N} \left[ h_i E_i(M_i) \right] + \mathrm{n}) \qquad (5)$$

For example, when N=3, a neural network model finally obtained by the receiver decoding module D may be represented as:

$$M_4 = D(h_1 E_1(M_1) \circledast h_2 E_2(M_2) \circledast h_3 E_3(M_3) + n) \qquad (6)$$

$M_4$ is a neural network model that is finally obtained by the receiver and that meets the task requirement.

To further understand a specific implementation of the channel communication operation in this embodiment of this application, detailed explanations are provided from two aspects: an underlying graph and a computation graph, with reference to topology analysis of the neural network structure.

1. Underlying graph (underlying graph)

As shown in FIG. 15, the neural network model in this embodiment of this application may be considered as a classic directed graph structure. The directed graph is a graph with directivity, and includes a group of vertices and a group of directional sides. Each side is connected to a pair of ordered vertices. The vertex may be considered as a neuron node or a neuron. A connection line between different neuron nodes corresponds to a weight value, and the weight value may be adjusted by using a training process. Specifically, the neural network model in FIG. 15 may be divided into an input layer, a hidden layer, and an output layer, and the neural network model may be stored and expressed by using a directed graph data structure. Therefore, a channel communication operation in the underlying graph may be represented as a combination of directed graph structures corresponding to different neural network models, that is, superimposition is performed on same parts in directed graph data structures of neural network models corresponding to a plurality of transmitters.

Specifically, a joint neural network model transmission process represented by the channel communication operation by using the underlying graph may be divided into the following steps.

1. Some neural network models that can be trained are selected, for example, neural network models obtained after abstract feature extraction is performed by using a deep convolutional layer in a convolutional neural network, and the neural network models are defined layer by layer based on an input layer, a hidden layer, and an output layer. Represented directed graph data is shown in FIG. 15. A neural network model $m_1$ is a three-layer neural network, and includes one hidden layer (which may also be referred to as a 1st layer). An input layer (which may also be referred to as a 0th layer) has two neurons, the hidden layer has one neuron, and an output layer (which may also be referred to as a 2nd layer) has two neurons. A neural network model $m_2$ is a three-layer neural network, and also includes one hidden layer. An input layer of the neural network model $m_2$ has two neurons, the hidden layer has two neurons, and an output layer has two neurons.

The neural network model $m_1$ may be further expressed as $[[\, l_1^{(1)} l_1^{(2)}, l_2^{(1)} l_1^{(2)}\, ]; \quad [\quad l_1^{(2)} l_1^{(3)}, l_1^{(2)} l_2^{(3)}\quad ]]$, and the neural network model $m_2$ may be expressed as $[[l_2^{(1)} l_1^{(2)}, l_2^{(1)} l_2^{(2)}, l_3^{(1)} l_1^{(2)}, l_3^{(1)} l_2^{(2)}]; [l_1^{(2)} l_2^{(3)}, l_1^{(2)} l_3^{(3)}, l_2^{(2)} l_2^{(3)}, l_2^{(2)} l_3^{(3)}]]$.

1 represents a network node in a directed graph structure corresponding to a neural network model. The network node may also be referred to as a neuron or a network unit. A superscript of l represents a number of a layer at which the neuron is located in the neural network model, and a subscript represents a location sequence number of the neuron in the neural network model in the directed graph at the layer to which the neuron belongs.

2. The transmitter sends, to the receiver by using synchronized knowledge base information, feature values such as neural network computation graph information, an optimizer, and a hyperparameter that are corresponding to the neural network model, and the receiver reserves, based on the received synchronized knowledge base network information, storage space corresponding to the neural network model that meets the task requirement.

3. Signals obtained after data of the transmitter neural network models is processed by using an encoding module and a trained neural network model are sent to the receiver through a same channel.

In an implementation, the signals of the neural network models sent by the transmitter may be superimposed on the channel, to obtain a signal corresponding to the target neural network model.

As shown in FIG. 15, a combined neural network model $m_3$ obtained by the receiver is a three-layer neural network, and the neural network model $m_3$ includes one hidden layer. An input layer includes three neurons, the hidden layer includes two neurons, and an output layer includes three neurons. The combined neural network model $M_3$ may be represented as:

$$[[l_2^{(1)}l_1^{(2)}, \ l_1^{(1)}l_1^{(2)}, l_2^{(1)}l_2^{(2)}, l_3^{(1)}l_1^{(2)}, l_3^{(1)}l_2^{(2)}]; \ [l_1^{(2)}l_2^{(3)}, l_1^{(2)}l_2^{(3)}, l_1^{(2)}l_3^{(3)}, l_2^{(2)}l_2^{(3)}, l_2^{(2)}l_3^{(3)}]]$$, where

$l_2^{(1)}l_1^{(2)}$ and $l_1^{(2)}l_2^{(3)}$ in the neural network model $m_3$ are parts that need to be superimposed through a channel communication operation, and other parts of the neural network model $m_3$ are parts that can be independently transmitted by transmitters.

In a possible implementation, for the neural network models sent by the transmitters, parameters of neural network models that need to be superimposed may be sent on a same channel, and parameters of remaining neural network models are sent on an orthogonal channel.

Specifically, a technical solution of transmitting a superimposition part of the neural network models on a same channel may be expressed as follows:

Each transmitter transmits two single-frequency sine (or cosine) signals separated by a required clock frequency, where if two clock frequencies are respectively $f_1$ and $f_2(f_2 > f_1)$, an expected clock frequency is $f_{ref} = f_2 - f_1$. For example, when $f_1 = 150MHz$, $f_2 = 160MHz$, $f_{ref} = 10MHz$. A reference signal sent by the transmitter is:

$$S_{tx}(t) = A_1 \cos(2\pi f_1 t) + A_2 \cos(2\pi f_2 t) \quad (7)$$

$A_1$ and $A_2$ represent amplitude values corresponding to different clock frequencies, and t represents time consumed for transmitting the reference signal.

Correspondingly, a signal received by the receiver is:

$$S_{rx}(t) = B_1 \cos(2\pi f_1 t + \emptyset_1) + B_2 \cos(2\pi f_2 t + \emptyset_2) \quad (8)$$

$B_1$ and $B_2$ represent amplitude values that are corresponding to different clock frequencies and that are obtained at the receiver for the reference signal through the channel. $\emptyset_1$ and $\emptyset_2$ respectively represent phase values that are corresponding to different clock frequencies and that are obtained at the receiver for the reference signal through the channel.

After square processing is performed on the signal received by the receiver, the following may be obtained:

$$S(t) = B_1 B_2 \cos(2\pi(f_2 - f_1)t + (\emptyset_2 - \emptyset_1)) + S_{f_2+f_1}(t) + S_{2f_2}(t) + S_{2f_1}(t) \quad (9)$$

$S_{f_2+f_1}(t)$, $S_{2f_2}(t)$, and $S_{2f_1}(t)$ are respectively high frequency items whose clock frequencies are $f_2 + f_1$, $f_2$, and $f_1$. $\delta\emptyset$ represents a phase difference between different clock frequencies of the receiver, and $\delta\emptyset = \emptyset_2 - \emptyset_1$. When a difference of $f_2 - f_1$ is relatively large, a high frequency part is filtered out by using a filter, so that a reference signal of a clock frequency used for synchronization is obtained as follows:

$$S_{ref} = B_1 B_2 \cos(2\pi f_{ref} t + \delta\emptyset) \quad (10)$$

2. Computation graph (computation graph)

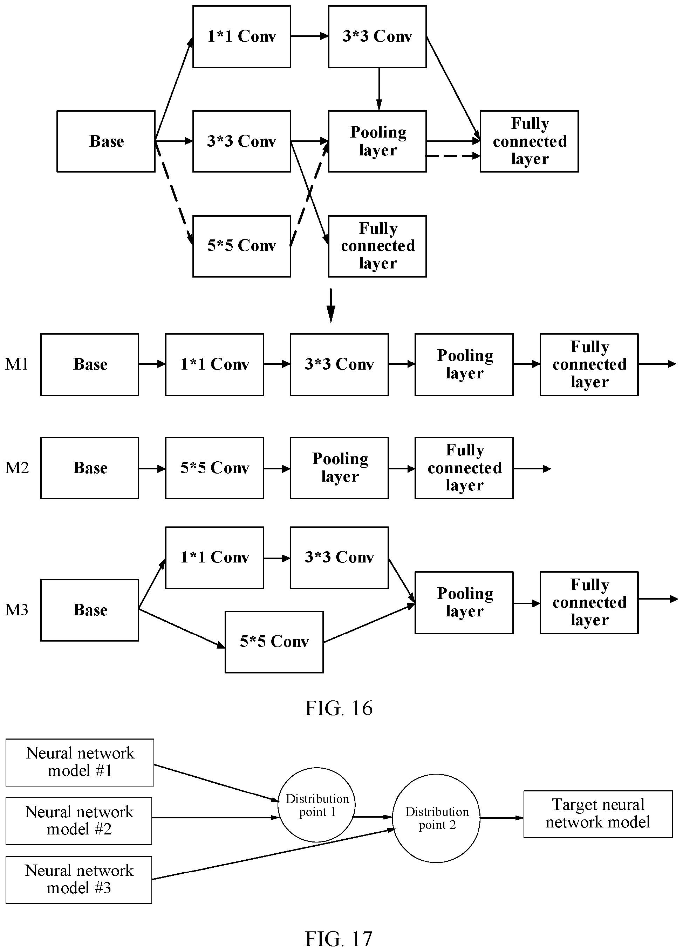

A channel communication operation provided in an embodiment of this application may also be represented by using a computation graph shown in FIG. 16. The computation graph is a language used to describe computing, and is a method for formalizing computing. In the computation graph, computation may be represented as a directed graph, and each node or module in the graph represents one variable. The variable may be a scalar, a vector, a matrix, a tensor, or the like. As shown in FIG. 16, the computation graph may include a backbone network, a convolutional layer, a pooling layer, and a fully connected layer. A function of the convolutional layer is to extract a feature from input data. The convolutional layer includes a plurality of convolution kernels, and each element forming the convolution kernel corresponds to one weight coefficient and one bias. A function of the pooling layer is to compress the feature at the convolutional layer and extract a main feature. Common pooling operations include maximum pooling and average pooling. The fully connected layer is configured to connect all feature values and send an output value to a classifier. The fully connected layer is usually located after the pooling layer, and converts all feature matrices of the pooling layer into a one-dimensional feature vector. In addition, the fully connected layer is usually located at the last layer of a convolutional neural network structure.

For example, in the computation graph shown in FIG. 16, the neural network model may be represented as a neural network model that is output after data output by the backbone network sequentially passes through the convolutional layer, the pooling layer, and the fully connected layer. For the neural network model $m_1$ shown in FIG.

16, a convolutional layer module of the neural network model $m_1$ includes a convolutional layer whose convolution kernel size is 1*1 and a convolutional layer whose convolution kernel size is 3*3. Similarly, the neural network model $m_2$ may be represented as data of a neural network model that is output after data output by the backbone network sequentially passes through the convolutional layer, the pooling layer, and the fully connected layer. The convolutional layer includes a convolution kernel whose size is 5*5. In this case, the neural network model $m_3$ obtained through channel communication operation combination may be represented by a computation graph as shown in FIG. 16. For example, for the neural network model $m_3$, data that is output after data (for example, the data may be a picture of 200*200 pixels) output by the backbone network sequentially passes through a convolutional layer including a convolution kernel whose size is 1*1 and a convolutional layer including a convolution kernel whose size is 3*3 and data obtained after the data output by the backbone network passes through a convolutional layer whose convolution kernel size is 5*5 arrive at the pooling layer at a same moment, and are superimposed at the pooling layer.

In the computation graph, a neuron node may be considered as a specific network module, cascading between these network modules is implemented by using a communication process, and the task requirement may be met by switching a communication path. For example, the backbone network in the computation graph may be located in a base station, and functions of other modules (including the convolutional layer, the pooling layer, and the fully connected layer) may be performed by one terminal device or separately performed by a plurality of terminal devices. This is not limited in embodiments of this application. As shown in FIG. 16, joint transmission of neural network models is performed in the foregoing manner in the computation graph, so that extraction results of different features of data can be implemented through communication routing, thereby improving an expression capability and performance of the neural network.

In a possible implementation, in the computation graph, a process of joint transmission of neural network models may be considered as a reverse process of a multicast routing algorithm. FIG. 17 is a diagram of an example of neural network model transmission in a computation graph. Specifically, for the process of joint transmission of neural network models, a multicast route may be established at the receiver, and data is transmitted to a plurality of transmitters after passing through a distribution point. The distribution point may be used as a node on which a communication operation needs to be performed on the neural network, and superimposition and combination of the neural network models are performed at the distribution point, to obtain the final target neural network model.

In a possible implementation, N first modules obtained through training obtain N first signals through processing based on information about N first models and fusion auxiliary information of the N first models, the transmitter device sends the N processed first signals to the receiver device, the N first signals are superimposed on a channel to obtain a second signal, and the second signal is corresponding to a target model that meets the task requirement.

S1460. The receiver receives the target neural network model.

Specifically, the receiver device receives the second signal.

In an implementation, the receiver device may decode the second signal by using a decoding module of the receiver, and further perform parsing to obtain the target neural network model. The second signal is obtained by superposing, on a channel, the N first signals sent by the transmitter device.

According to the foregoing model transmission manner, one or more transmitter devices may determine a plurality of neural network models based on the task requirement information sent by the receiver device, and send a combined neural network model to the receiver device in a joint transmission manner. Compared with a conventional model transmission manner in which neural network models are transmitted independently of each other, the foregoing model transmission manner can significantly reduce resource overheads and a latency in a transmission process, and effectively save storage space reserved by the receiver device for the target neural network model.

FIG. 18 is a schematic flowchart of another example model transmission method according to an embodiment of this application. The method includes step S1810 to step S1860. The following describes steps S1810 to S1860 in detail. Different from those in the model transmission method shown in FIG. 14, steps S1810 to S1830 and step S1850 of the method shown in FIG. 18 may be performed by a server (for example, a cloud device) that provides a service for a receiver device. It should be understood that steps S1810 to S1860 are similar to steps S1410 to S1460 in FIG. 14. To avoid repetition, detailed descriptions thereof are omitted herein.

According to the foregoing model transmission manner, a cloud device may be introduced to determine a plurality of neural network models based on task requirement information sent by a receiver device, and the cloud device sends a combined neural network model to the receiver device in a joint transmission manner. Compared with a conventional model transmission manner in which neural network models are transmitted independently of each other, the foregoing model transmission manner can significantly reduce resource overheads and a latency in a transmission process. This helps control diversity and effectiveness of an AI application, and effectively save storage space reserved by the receiver device for a target neural network model.

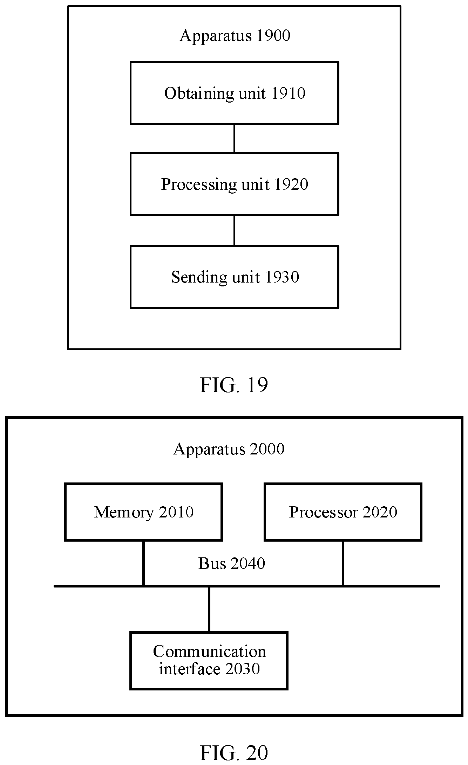

FIG. 19 is a block diagram of a model transmission apparatus according to an embodiment of this application. The model transmission apparatus shown in FIG. 19 includes an obtaining unit 1910, a processing unit 1920, and a sending unit 1930.

The obtaining unit 1910, the processing unit 1920, and the sending unit 1930 may be configured to perform the model transmission method in embodiments of this application, for example, may be configured to perform the method 1200 in FIG. 12.

The obtaining unit 1910 is configured to receive information about N first models and fusion auxiliary information, where the fusion auxiliary information includes an external feature value of a target model, and the target model corresponds to a second task.

The processing unit 1920 is configured to determine N first signals based on the information about the N first models and the fusion auxiliary information, and send the N first signals, where the N first models correspond to N first tasks, N is an integer greater than or equal to 2, and the second task is different from the first tasks.

The sending unit 1930 is configured to send the N first signals to a receiver device.

It should be understood that, in this embodiment of this application, the obtaining unit 1910 may alternatively be a receiving unit, a processing unit, or a unit having receiving and processing functions.

In a possible implementation, when the obtaining unit 1910 is a receiving unit, a transmitter device may receive the information about the first models sent by a cloud device or the receiver device. When the obtaining unit 1910 is a processing unit, a transmitter device may be configured to autonomously determine the information about the first models locally. When the obtaining unit 1910 is a unit having receiving and processing functions, a transmitter device may receive the information about the first models sent by a cloud device or the receiver device, or may autonomously determine the information about the first models locally.

Specifically, the processing unit 1920 determines the N first signals through first modules.

Optionally, in an embodiment, the first modules are determined based on a parameter of a channel for sending the N first signals.

The parameter of the channel includes one or more of the following: channel state information CSI, a signal-to-noise ratio SNR, and link quality. The channel state information may include a channel quality indicator CQI, a rank indicator RI, and a precoding matrix PMI.

For example, the transmitter device may obtain configuration information of a neural network model based on the channel state information and the signal-to-noise ratio in the channel parameter, and further determine N first modules that are in a one-to-one correspondence with the N first models.

Specifically, the model transmission apparatus provided in this embodiment of this application further includes the first modules. The first modules are configured to determine the N first signals based on the N first models and the fusion auxiliary information.

Optionally, in an embodiment, a first module corresponding to an $i^{th}$ first model in the N first models is determined based on information about at least one first model other than the $i^{th}$ first model in the N first models, where $i \in [1, N]$.

Optionally, in an embodiment, the N first modules are obtained through training based on training data, the training data includes M first training signals and the target model, the M first training signals are in a one-to-one correspondence with M training models, the target model can meet a task corresponding to the M training models, and M is an integer greater than or equal to 2.

Optionally, in an embodiment, the processing unit 1920 is further configured to obtain M original models; input each first training signal into a corresponding original model to obtain M second training signals; superimpose the M second training signals on a same channel to obtain a third training signal; parse the third training signal to obtain an intermediate model; adjust parameters of the M original models based on a deviation between the intermediate model and the target model to obtain a model library; and obtain the first modules from the model library, where the M original models are in a one-to-one correspondence with the M first training signals, M is an integer greater than or equal to 2, the model library includes an adjusted original model, and a deviation between an adjusted intermediate model and the target model falls within a preset range.

Optionally, in an embodiment, the sending unit 1930 is further configured to send the fusion auxiliary information of the N first models to the receiver device.

It should be noted that the apparatus is embodied in a form of a function unit. The term "unit" herein may be implemented in a form of software and/or hardware. This is not specifically limited.

For example, the "unit" may be a software program, a hardware circuit, or a combination thereof that implements the foregoing functions. The hardware circuit may include an application-specific integrated circuit (application-specific integrated circuit, ASIC), an electronic circuit, a memory and a processor (such as a shared processor, a dedicated processor, or a group of processors) configured to execute one or more software or firmware programs, a combined logic circuit, and/or another suitable component that supports the described function.

Therefore, the example units described in embodiments of this application can be implemented by using electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

FIG. 20 is a diagram of a hardware structure of a neural network model training apparatus according to an embodiment of this application. The neural network model training apparatus 2000 (the apparatus 2000 may be specifically a computer device) shown in FIG. 20 includes a memory 2010, a processor 2020, a communication interface 2030, and a bus 2040. The memory 2010, the processor 2020, and the communication interface 2030 implement mutual communication connections through the bus 2040.

The memory 2010 may be a read-only memory (read-only memory, ROM), a static storage device, a dynamic storage device, or a random access memory (random access memory, RAM). The memory 2010 may store a program. When the program stored in the memory 2010 is executed by the processor 2020, the processor 2020 is configured to perform the steps of the neural network model training method in embodiments of this application. Specifically, the processor 2020 may perform the method 1200 shown in FIG. 12 above.

The processor 2020 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the neural network model training method in method embodiments of this application.

Alternatively, the processor 2020 may be an integrated circuit chip and has a signal processing capability. For example, the processor may be the chip shown in FIG. 9. In an implementation process, steps of the neural network model training method in this application may be completed by using a hardware integrated logic circuit in the processor 2020 or instructions in a form of software.

The processor 2020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the methods related with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 2010. The processor 2020 reads information in the memory 2010, and completes, in combination with hardware of the processor 2020, functions that need to be performed by units included in the training apparatus shown in FIG. 19, or performs the neural network model transmission method shown in FIG. 12 in method embodiments of this application.

The communication interface 2030 uses a transceiver apparatus, for example but not for limitation, a transceiver, to implement communication between the apparatus 2000 and another device or communication network. For example, training data may be obtained through the communication interface 2030.

The bus 2040 may include a path for transmitting information between the components (for example, the memory 2010, the processor 2020, and the communication interface 2030) of the apparatus 2000.

It should be noted that, although only the memory, the processor, and the communication interface are shown in the apparatus 2000, in a specific implementation process, a person skilled in the art should understand that the apparatus 2000 may further include another component required for implementing normal running. In addition, based on a specific requirement, a person skilled in the art should understand that the apparatus 2000 may further include hardware components for implementing other additional functions. In addition, a person skilled in the art should understand that the apparatus 2000 may include only components necessary for implementing embodiments of this application, but does not need to include all components shown in FIG. 20.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including a single item (piece) or any combination of a plurality of items (pieces). For example, at least one of a, b, or c may represent a, b, c, a and b, a and c, b and c, or a, b, and c, where a, b, and c may be singular or plural.

It should be understood that in embodiments of this application, sequence numbers of processes do not mean a sequence of execution. The sequence of execution of the processes should be determined according to functions and internal logic of the processes, and should not constitute any limitation on an implementation process of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A model transmission method, wherein the method comprises:

   obtaining information about N first models, wherein the N first models correspond to N first tasks, and N is an integer greater than or equal to 2;
   obtaining fusion auxiliary information, wherein the fusion auxiliary information comprises an external feature value of a target model, the target model corresponds to a second task, and the second task is different from the N first tasks;
   determining N first signals based on the information about the N first models and the fusion auxiliary information; and
   sending the N first signals.

2. The method according to claim 1, wherein information about the first model or information about the target model comprises an external feature value of the model and/or a parameter of the model, the external feature value of the model comprises one or more of the following information: neural network computation graph information, optimizer information, and hyperparameter information, and the parameter of the model comprises one or more of the following parameters: a weight matrix, a weight vector, a bias matrix, and a bias vector.

3. The method according to claim 1 or 2, wherein the N first signals are obtained by first modules by processing the information about the N first models and the fusion auxiliary information.

4. The method according to claim 3, wherein the first modules are obtained through training based on training data, the training data comprises M first training signals and the target model, the M first training signals are in a one-to-one correspondence with M training models, the target model can meet a task corresponding to the M training models, and M is an integer greater than or equal to 2.

5. The method according to claim 3, wherein the first modules are determined based on a parameter of a channel for sending the N first signals.

6. The method according to claim 3, wherein a first module corresponding to an $i^{th}$ model in the N first models is determined based on information about at least one first model in the N first models other than the $i^{th}$ model in the first models.

7. The method according to claim 4, wherein the method further comprises:

   obtaining M original models, wherein the M original models are in a one-to-one correspondence with the M first training signals, and M is an integer greater than or equal to 2;
   inputting each first training signal into a corresponding original model, to obtain M second training signals;
   superimposing the M second training signals on a same channel to obtain a third training signal, wherein the third training signal corresponds to an intermediate model;
   adjusting parameters of the M original models based on a deviation between the intermediate model and the target model, to obtain a model library, wherein the model library comprises an adjusted original model, and a deviation between an adjusted intermediate model and the target model falls within a preset range; and
   obtaining the first modules from the model library.

8. The method according to any one of claims 1 to 7, wherein the method further comprises:
   sending the fusion auxiliary information.

9. The method according to any one of claims 1 to 8, wherein the fusion auxiliary information is from a receiver apparatus of the N first signals; or

the fusion auxiliary information is from a server that provides a service for a receiver apparatus of the N first signals.

10. A model transmission system, wherein the model transmission system comprises:

a transmitter apparatus, configured to obtain information about N first models and fusion auxiliary information, determine N first signals based on the information about the N first models and the fusion auxiliary information, and send the N first signals, wherein the N first models correspond to N first tasks, N is an integer greater than or equal to 2, the fusion auxiliary information comprises an external feature value of a target model, the target model corresponds to a second task, and the second task is different from the N first tasks; and

a receiver apparatus, configured to receive a second signal, and parse the received second signal to obtain the target model, wherein the second signal is obtained based on the N first signals.

11. The system according to claim 10, wherein the second signal is obtained by superimposing the N first signals.

12. The system according to claim 10 or 11, wherein information about the first model or information about the target model comprises an external feature value of the model and/or a parameter of the model, the external feature value of the model comprises one or more of the following information: neural network computation graph information, optimizer information, and hyperparameter information, and the parameter of the model comprises one or more of the following parameters: a weight matrix, a weight vector, a bias matrix, and a bias vector.

13. The system according to claim 10 or 11, wherein the N first signals are obtained by first modules by processing the information about the N first models and the fusion auxiliary information.

14. The system according to claim 13, wherein the first modules are obtained through training based on training data, the training data comprises M first training signals and the target model, the M first training signals are in a one-to-one correspondence with M training models, the target model can meet a task corresponding to the M training models, and M is an integer greater than or equal to 2.

15. The system according to claim 13, wherein the first modules are determined based on a parameter of a channel for sending the N first signals.

16. The system according to claim 13, wherein a first module corresponding to an $i^{th}$ model in the N first models is determined based on information about at least one first model in the N first models other than the $i^{th}$ model in the first models.

17. The system according to claim 14, wherein the transmitter apparatus is further configured to obtain M original models; input each first training signal into a corresponding original model to obtain M second training signals; superimpose the M second training signals on a same channel to obtain a third training signal, wherein the third training signal corresponds to an intermediate model; adjust parameters of the M original models based on a deviation between the intermediate model and the target model to obtain a model library; and obtain the first modules from the model library, wherein the M original models are in a one-to-one correspondence with the M first training signals, M is an integer greater than or equal to 2, the model library comprises an adjusted original model, and a deviation between an adjusted intermediate model and the target model falls within a preset range.

18. The system according to any one of claims 10 to 17, wherein the transmitter apparatus is further configured to send the fusion auxiliary information to the receiver apparatus.

19. The system according to any one of claims 10 to 18, wherein the fusion auxiliary information is from the receiver apparatus; or

the fusion auxiliary information is from a server that provides a service for the receiver apparatus.

20. A model transmission system, wherein the model transmission system comprises:

a first transmitter apparatus, configured to obtain information about S first models in N first models and first fusion auxiliary information, determine S first signals based on the information about the S first models in the N first models and the first fusion auxiliary information, and send the S first signals, wherein the S models in the N first models correspond to S first tasks, S is an integer greater than or equal to 1, the first fusion auxiliary information comprises an external feature value of a target model, the target model corresponds to a second task, and the second task is different from the N first tasks;

a second transmitter apparatus, configured to obtain information about K first models in the N first models and second fusion auxiliary information, determine K first signals based on the information about the K first models in the N first models and the second fusion auxiliary information, and send the K first signals, wherein the K models in the N first models correspond to K first tasks, K is an integer greater than or equal to 1, the second fusion auxiliary information comprises the external feature value of the target model, the target model corresponds to the second task, the second task is different from the N first tasks, and an intersection set of the S first models and the K first models is an empty set; and

a receiver apparatus, configured to receive a second signal, and parse the received second signal to obtain the target model, wherein the second signal is obtained based on the S first signals and the K first signals.

21. The system according to claim 20, wherein the second signal is obtained by superimposing the S first signals and the K first signals.

22. The system according to claim 20 or 21, wherein information about the first model or information about the target model comprises an external feature value of the model and/or a parameter of the model, the external feature value of the model comprises one or more of the following information: neural network computation graph information, optimizer information, and hyperparameter information, and the parameter of the model comprises one or more of the following parameters: a weight matrix, a weight vector, a bias matrix, and a bias vector.

23. The system according to claim 20 or 21, wherein the S first signals are obtained by the first transmitter apparatus by processing the information about the S first models in the S first models and the first fusion auxiliary information through corresponding first modules, and the K first signals are obtained by the second transmitter apparatus by processing the information about the K first models in the K first models and the second fusion auxiliary information through corresponding first modules.

24. The system according to claim 23, wherein the first modules corresponding to the first transmitter apparatus or the first modules corresponding to the second transmitter apparatus are obtained through training based on training data, the training data comprises M first training signals and the target model, the M first training signals are in a one-to-one correspondence with M training models, the target model can meet a task corresponding to the M training models, and M is an integer greater than or equal to 2.

25. The system according to claim 23, wherein the first module corresponding to the first transmitter apparatus or the first module corresponding to the second transmitter apparatus is determined based on a parameter of a channel for sending a corresponding first signal.

26. The system according to claim 23, wherein a first module corresponding to an $i^{th}$ model in the S first models is determined based on information about at least one first model in the S first models other than the $i^{th}$ model in the first models; and a first module corresponding to a $j^{th}$ model in the K first models is determined based on information about at least one first model in the K first models other than the $j^{th}$ model in the first models.

27. The system according to claim 24, wherein the transmitter apparatus is further configured to obtain M original models; input each first training signal into a corresponding original model to obtain M second training signals; superimpose the M second training signals on a same channel to obtain a third training signal, wherein the third training signal corresponds to an intermediate model; adjust parameters of the M original models based on a deviation between the intermediate model and the target model to obtain a model library; and obtain the first modules from the model library, wherein the M original models are in a one-to-one correspondence with the M first training signals, M is an integer greater than or equal to 2, the model library comprises an adjusted original model, and a deviation between an adjusted intermediate model and the target model falls within a preset range.

28. A model transmission apparatus, comprising:

an obtaining unit, configured to obtain fusion auxiliary information and information about N first models, wherein the fusion auxiliary information comprises an external feature value of a target model, and the target model corresponds to a second task;

a processing unit, configured to determine N first signals based on the information about the N first models and the fusion auxiliary information, and send the N first signals, wherein the N first models correspond to N first tasks, N is an integer greater than or equal to 2, and the second task is different from the first tasks; and
a sending unit, configured to send the N first signals to a receiver device.

29. The apparatus according to claim 28, wherein information about the first model or information about the target model comprises an external feature value of the model and/or a parameter of the model, the external feature value of the model comprises one or more of the following information: neural network computation graph information, optimizer information, and hyperparameter information, and the parameter of the model comprises one or more of the following parameters: a weight matrix, a weight vector, a bias matrix, and a bias vector.

30. The apparatus according to claim 28 or 29, wherein the processing unit determines the N first signals by using first modules.

31. The apparatus according to claim 30, wherein the first modules are obtained through training based on training data, the training data comprises M first training signals and the target model, the M first training signals are in a one-to-one correspondence with M training models, the target model can meet a task corresponding to the M training models, and M is an integer greater than or equal to 2.

32. The apparatus according to claim 30, wherein the first modules are determined based on a parameter of a channel for sending the N first signals.

33. The apparatus according to claim 30, wherein a first module corresponding to an $i^{th}$ model in the N first models is determined based on information about at least one first model in the N first models other than the $i^{th}$ model in the first models.

34. The apparatus according to claim 31, wherein the processing unit is further configured to obtain M original models; input each first training signal into a corresponding original model to obtain M second training signals; superimpose the M second training signals on a same channel to obtain a third training signal; parse the third training signal to obtain an intermediate model; adjust parameters of the M original models based on a deviation between the intermediate model and the target model to obtain a model library; and obtain the first modules from the model library, wherein the M original models are in a one-to-one correspondence with the M first training signals, M is an integer greater than or equal to 2, the model library comprises an adjusted original model, and a deviation between an adjusted intermediate model and the target model falls within a preset range.

35. The apparatus according to any one of claims 28 to 34, wherein the sending unit is further configured to send the fusion auxiliary information.

36. The apparatus according to any one of claims 28 to 35, wherein the fusion auxiliary information is from the receiver apparatus; or
the fusion auxiliary information is from a server that provides a service for the receiver apparatus.

37. A model transmission apparatus, comprising a processor and a memory, wherein the memory is configured to store program instructions, and the processor is configured to invoke the program instructions to perform the method according to any one of claims 1 to 9.

38. A computer-readable storage medium, wherein the computer-readable storage medium stores program code to be executed by a device, and the program code is used to implement the method according to any one of claims 1 to 9.

39. A chip, wherein the chip comprises a processor and a data interface, and the processor reads, through the data interface, instructions stored in a memory, to perform the method according to any one of claims 1 to 9.

40. A computer program product, wherein the computer program product comprises program code to be executed by a device, and the program code is used to implement the method according to any one of claims 1 to 9.

| Transmitter neural network model | → | Source encoding Channel encoding | → | Channel | → | Source decoding Channel decoding | → | Receiver neural network model |

FIG. 1

Satellite base station

Terminal device #1        Terminal device #2

(a)

Satellite base station

Terrestrial base station        Terminal device

(b)

FIG. 2

| Satellite base station #1 | Satellite base station #2 |
|---|---|
| Communication module → Transceiver antenna | Transceiver antenna ← Communication module |
| APT module → APT transmission/ reception | APT transmission/ reception ← APT module |

Channel

FIG. 3

Base station

Terminal device #1     Terminal device #2

FIG. 4

Intelligent information chain

Intelligent product and industry application

General-purpose capability | Translation/Text analysis/... | Speech/Vision/Image...

Data | Data processing | Data training/Machine learning/Deep learning | Search/Inference/Decision-making | ...

Infrastructure | Sensor | Smart chip | Basic platform | ...

IT value chain

FIG. 5

600

Data collection device 660

System architecture 600

Data stream

Database 630

Training device 620

Data stream

Client device 640

Input data

Output result

I/O interface 612

Execution device 610

Target model/rule 601

Computing module 611

Data storage system 650

Preprocessing module 613

FIG. 6

Image processing result

Neural
network
layer 730

Output layer 740

Hidden layer n (73n)

Hidden layer 2 (732)

Hidden layer 1 (731)

Convolutional
layer/Pooling
layer 720

726

725

724

723

722

721

Convolutional
neural network
(CNN) 700

Input layer 710

To-be-processed
image

FIG. 7

Image processing result

Neural
network
layer 830

Output layer 840

Hidden layer n (83n)

Hidden layer 2 (832)

Hidden layer 1 (831)

Convolutional
layer/Pooling
layer 820

| 826 | 826 | 826 |
| 825 | 825 | 825 |
| 824 | 824 | 824 |
| 823 | 823 | 823 |
| 822 | 822 | 822 |
| 821 | 821 | 821 |

Convolutional
neural network
(CNN) 800

Input layer 810

To-be-processed image

FIG. 8

```
                                        ┌─────────────────────┐
                                        │   Weight memory     │
                                        │        902          │
                                        └─────────────────────┘
                                                   │
                                                   ▼
                          ┌──────────────────┐  ┌─────────────────────┐
┌──────────┐              │ Input memory 901 │─▶│  Operation circuit  │
│ Host CPU │◀────────────▶│                  │  │        903          │
└──────────┘              └──────────────────┘  └─────────────────────┘
      ▲                            ▲                 │          ▲
      │                            │                 ▼          │
      │                  ┌──────────────────┐  ┌──────────────┐ │
      │                  │ Vector calculation│◀▶│ Accumulator  │ │
      │                  │    unit 907       │  │     908      │ │
      │                  └──────────────────┘  └──────────────┘ │
      │                                                         │
      │   ┌─────────────────┐  ┌──────────────┐ ┌────────────┐ ┌──────────────┐
      │   │ Direct memory   │  │              │ │            │ │ Instruction  │
      │   │ access controller│◀▶│ Unified     │◀▶│ Controller │◀│ fetch        │
      │   │      905        │  │ memory 906   │ │    904     │ │ buffer 909   │
      │   └─────────────────┘  └──────────────┘ └────────────┘ └──────────────┘
      │            ▲                                                   ▲
      ▼            ▼                                                   ▼
┌──────────┐  ┌──────────────────────────────────────────────────────────────┐
│ External │◀▶│                 Bus interface unit 910                         │
│ memory   │  └──────────────────────────────────────────────────────────────┘
└──────────┘

                       Neural-network processing unit 900
```

FIG. 9

1000

Data storage system 10<u>50</u>

Execution device 10<u>10</u>

. . .

Communication network

Local device 1001

Local device 1002

FIG. 10

1100

Cloud data center

Training apparatus 1110

Cloud environment

Cloud service platform

Cloud service for training a neural network

Purchase the cloud service

Provide the cloud service for training a neural network

User

(a)

Cloud environment

Training apparatus 1110

To-be-trained neural network model and training set

Target neural network model

User

(b)

FIG. 11

EP 4 521 653 A1

<u>1200</u>

| S1210: Obtain information about N first models |
|---|

| S1220: Obtain fusion auxiliary information |
|---|

| S1230: Determine N first signals based on the information about the N first models and the fusion auxiliary information |
|---|

| S1240: Send the N first signals |
|---|

FIG. 12

FIG. 13

1400

FIG. 14

FIG. 15

FIG. 16

FIG. 17

1800

```
┌──────────┐              ┌─────────────┐                    ┌──────────┐
│ Receiver │              │ Transmitter │                    │  Cloud   │
│          │              │             │                    │  device  │
└──────────┘              └─────────────┘                    └──────────┘
```

S1810: Task requirement information

S1820: Determine an external feature value of a target neural network model

S1830a: Fusion auxiliary information (neural network computation graph information, optimizer information, and hyperparameter)

S1830b: Fusion auxiliary information (neural network computation graph information, optimizer information, and hyperparameter)

S1840a: Fusion auxiliary information

S1840b: Fusion auxiliary information

S1850: Joint transmission of neural network models

S1860: Receive the required target neural network model

FIG. 18

Apparatus 1900

Obtaining unit 1910

Processing unit 1920

Sending unit 1930

FIG. 19

Apparatus 2000

Memory 2010

Processor 2020

Bus 2040

Communication interface 2030

FIG. 20

| **INTERNATIONAL SEARCH REPORT** | International application No. |
| | **PCT/CN2023/089764** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

IPC:H04B H04L

Documentation searched other than minimum documentation to the extent that such documents are included in the fields searched

Electronic data base consulted during the international search (name of data base and, where practicable, search terms used)

CNTXT, ENTXTC, VEN, VCN, DWPI: 模型 传输 人工智能 辅助 融合 特征 训练 AI model transmission artificial intelligence assisted fusion feature train

**C. DOCUMENTS CONSIDERED TO BE RELEVANT**

| Category* | Citation of document, with indication, where appropriate, of the relevant passages | Relevant to claim No. |
|---|---|---|
| A | CN 110766151 A (NATIONAL UNIVERSITY OF DEFENSE TECHNOLOGY OF PLA) 07 February 2020 (2020-02-07) <br> description, paragraphs 5-55 | 1-40 |
| A | US 2019050714 A1 (ANTS TECHNOLOGY (HK) LTD.) 14 February 2019 (2019-02-14) <br> entire document | 1-40 |
| A | US 2022086057 A1 (QUALCOMM INC.) 17 March 2022 (2022-03-17) <br> entire document | 1-40 |
| A | US 2022108687 A1 (GENERAL DYNAMICS MISSION SYSTEMS, INC.) 07 April 2022 (2022-04-07) <br> entire document | 1-40 |
| A | WO 2022041015 A1 (HUAWEI TECHNOLOGIES CO., LTD.) 03 March 2022 (2022-03-03) <br> entire document | 1-40 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 July 2023** | **27 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/089764**

| Patent document cited in search report | | | Publication date (day/month/year) | Patent family member(s) | | | Publication date (day/month/year) |
|---|---|---|---|---|---|---|---|
| CN | 110766151 | A | 07 February 2020 | None | | | |
| US | 2019050714 | A1 | 14 February 2019 | US | 2021056392 | A1 | 25 February 2021 |
| | | | | US | 2021056393 | A1 | 25 February 2021 |
| | | | | US | 2021042611 | A1 | 11 February 2021 |
| | | | | US | 2021042612 | A1 | 11 February 2021 |
| | | | | US | 2021064967 | A1 | 04 March 2021 |
| | | | | US | 2021034951 | A1 | 04 February 2021 |
| US | 2022086057 | A1 | 17 March 2022 | US | 11502915 | B2 | 15 November 2022 |
| | | | | TW | 202215799 | A | 16 April 2022 |
| | | | | WO | 2022055668 | A1 | 17 March 2022 |
| US | 2022108687 | A1 | 07 April 2022 | CA | 3133283 | A1 | 07 April 2022 |
| | | | | US | 11694678 | B2 | 04 July 2023 |
| | | | | EP | 3982364 | A2 | 13 April 2022 |
| WO | 2022041015 | A1 | 03 March 2022 | None | | | |

Form PCT/ISA/210 (patent family annex) (July 2022)

**EP 4 521 653 A1**

**Patent documents cited in the description**

- CN 202210609813